# EUROPÄISCHE PATENTSCHRIFT

(11) **EP 2 794 434 B1**
(45) Veröffentlichungstag und Bekanntmachung des Hinweises auf die Patenterteilung: **08.06.2016**
(21) Anmeldenummer: 12822952.3
(22) Anmeldetag: 14.12.2012
(51) Int. Cl.: B65G 1/137

(54) **KOMMISSIONIERSTATION UND VERFAHREN ZUM KOMMISSIONIEREN VON ARTIKELN**
PICKING STATION AND METHOD FOR PICKING ARTICLES
POSTE DE PRÉPARATION DES COMMANDES ET PROCÉDÉ DE PRÉPARATION DES MARCHANDISES COMMANDÉES

(30) Priorität: 23.12.2011 AT 18832011
(43) Veröffentlichungstag der Anmeldung: 29.10.2014
(73) Patentinhaber: TGW Logistics Group GmbH, 4600 Wels (AT)
(72) Erfinder: HANSL, Rudolf, A-4020 Linz (AT); LACKNER, Reinhold, A-4663 Laakirchen (AT)
(74) Vertreter: Burger, Hannes
(86) Internationale Anmeldenummer: PCT/AT2012/050196
(87) Internationale Veröffentlichungsnummer: WO 2013/090962

(56) Entgegenhaltungen:
- WO-A1-2012/085271
- DE-A1-102005 045 971

## Beschreibung

Die Erfindung betrifft ein Verfahren zum Kommissionieren von Artikeln aus Quell-Ladehilfsmitteln in Ziel-Ladehilfsmittel durch eine Kommissionierperson an einer Kommissionierstation, bei dem die Ladehilfsmittel über eine Fördertechnik zur Kommissionierstation gefördert und an der Kommissionierstation zum Kommissionieren der Artikel bereitgestellt sowie nach einem Kommissioniervorgang über die Fördertechnik wieder von der Kommissionierstation abgefördert werden, wobei eine Steuerungsvorrichtung, insbesondere ein Materialflussrechner, die Förderbewegungen der Ladehilfsmittel koordiniert. Ferner betrifft die Erfindung eine Kommissionierstation zum Kommissionieren von Artikeln aus Quell-Ladehilfsmitteln in Ziel-Ladehilfsmittel durch eine Konimissionierperson, welche eine erste Fördertechnik mit einer ersten Bereitstellfördervorrichtung zum Antransport von Quell-Ladehilfsmitteln zur Kommissionierstation und einer zweiten Bereitstellfördervorrichtung zum Antransport von Ziel-Ladehilfsmitteln zur Kommissionierstation und eine zweite Fördertechnik zum Abtransport von Quell-Ladehilfsmitteln und Ziel-Ladehilfsmitteln von der Kommissionierstation sowie eine Steuerungsvorrichtung, insbesondere einen Materialflussrechner, zur Koordinierung der Förderbewegungen der Ladehilfsmittel umfasst.

In jüngster Zeit ist man dazu übergegangen, den Kommissioniervorgang nach dem Prinzip "Ware zum Mann" zu gestalten. Beim Prinzip Ware zum Mann ist der Kommissionierperson ein fester Arbeitsplatz zugewiesen, von dem sie sich so wenig und selten wie möglich wegbewegt. Die zu kommissionierenden Artikel werden zur Kommissionierperson transportiert. Dies steigert die Effizienz eines Kommissioniersystems und erfüllt die hohen ergonomischen Anforderungen, die heutzutage immer weiter in den Vordergrund treten.

Unter dem Begriff "Artikel" sind solche Gegenstände zu verstehen, die in einem Artikellager lagerbar sind. Artikel können z. B. Arzneimittel, Werkzeugteile oder ähnliches sein, die von Kunden in beliebiger Anzahl und Vielzahl bestellt werden können. Diese bestellten Artikel werden dann zu einem einzigen Auftrag zusammengefasst, wobei die Artikel dann in ein Ziel-Ladehilfsmittel kommissioniert und die kommissionierten Artikel dem Kunden geliefert werden.

Unter einem Ziel-Ladehilfsmittel wird ein Behältnis verstanden, in den zu kommissionierende Artikel gelegt werden. Ein Ziel-Ladehilfsmittel kann eine Vielzahl von verschiedenen Artikein aufnehmen, bis der ihm zugeordnete Kommissionierauftrag abgearbeitet ist, d. h. bis alle zum Kommissionierauftrag gehörenden Artikel aus dem Artikellager zum Arbeitsplatz transportiert sind und dort von der Kommissionierperson in den entsprechenden Ziel-Ladehilfsmittel gelegt sind.

Aus der DE 10 2005 045 971 A1 und DE 101 36 354 A1 ist eine Kommissionierstation zum Kommissionieren von Artikeln aus Quell-Ladehilfsmitteln in Ziel-Ladehilfsmittel durch eine Kommissionierperson bekannt, welche erste Pufferplätze (Entnahmeplätze) zur Bereitstellung von Quell-Ladehilfsmitteln, zweite Pufferplätze (Beladeplätze) zur Bereitstellung von Ziel-Ladehilfsmitteln, eine erste Fördertechnik zum Antransport von Quell-Ladehilfsmitteln zu den Entnahmeplätzen und zum Abtransport von Quell-Ladehilfsmitteln von den Entnahmeplätzen sowie eine zweite Fördertechnik zum Antransport von Ziel-Ladehilfsmitteln zu den Beladeplätzen und zum Abtransport von Ziel-Ladehilfsmitteln von den Beladeplätzen umfasst. Die Beladeplätze und Entnahmeplätze sind auf unterschiedlichem Höhenniveau übereinander angeordnet. Die DE 10 2005 045 971 A1 offenbart ein Verfahren zum Kommissionieren und eine Kommissionierstation gemäß den Oberbegriffen der Ansprüche 1 und 12. Die EP 1 572 558 A1 offenbart eine Kommissionierstation und ein Verfahren zum Kommissionieren von Artikeln aus Quell-Ladehilfsmitteln in Ziel-Ladehilfsmittel durch eine Kommissionierperson, bei dem die Quell-Ladehilfsmittel auf einer zumindest im Arbeitsbereich der Kommissionierperson um ihre Längsachse gekippte Förderbahn einer ersten Fördertechnik in eine Kommissionierposition gefördert werden. Die Ziel-Ladehilfsmittel werden auf einer zweiten Fördertechnik zu einem unterhalb der Förderbahn angeordneten Puffer gefördert und auf Pufferplätzen im Puffer bereitgestellt. Die Förderbahn umfasst eine Ankippeinrichtung, die in den Arbeitsbereich zu transportierende Quell-Ladehilfsmittel in eine gekippte Lage kippt, und eine Rückkippeinrichtung, die ein Quell-Ladehilfsmittel aus der gekippten Lage wieder zurückkippt. Das Quell-Ladehilfsmittel wird aus einem Artikellager zur Kommissionierstation in den Arbeitsbereich zeitlich derart transportiert, dass das Quell-Ladehilfsmittel und Ziel-Ladehilfsmittel im Arbeitsbereich in etwa gleichzeitig ankommen.

Diese bekannten Kommissionierstationen mit in unterschiedlichen Fördertechnikebenen verlaufenden Fördertechniken für Quell-Ladehilfsmittel und Ziel-Ladehilfsmittel bauen sehr groß und sind dementsprechend auch die Transportwege für die Quell-Ladehilfsmittel und Ziel-Ladehilfsmittel lang. Durch die Höhendifferenz zwischen den Fördertechnikebenen und der damit verbundenen Bereitstellung von Quell-Ladehilfsmitteln und Ziel-Ladehilfsmitteln auf unterschiedlichem Höhenniveau, kann auch der Anforderung an die ergonomische Gestaltung nur beschränkt entsprochen werden. Die Kommissionierperson hat außerdem längere Kommissionierbewegungen zu vollziehen, um einen Artikel aus dem Quell-Ladehilfsmittel zu entnehmen und in ein Ziel-Ladehilfsmittel abzulegen.

Die DE 103 07 949 A1 sieht zwar die Fördertechniken für Quell-Ladehilfsmittel und Ziel-Ladehilfsmittel im Arbeitsbereich der Kommissionierperson innerhalb einer einzigen Fördertechnikebene vor, jedoch ist auch nach dieser bekannten Ausführung ein erhöhter Platzbedarf erforderlich. Zudem werden die Quell-Ladehilfsmittel über eine Zufördervorrichtung der ersten Fördertechnik zu einer Kommissionierposition angefördert und danach über eine Abfördervorrichtung der ersten Fördertechnik wieder von der Kommissionierposition abgefördert. Ebenso werden die Ziel-Ladehilfsmittel über eine Zufördervorrichtung der zweiten Fördertechnik zu einer Kommissionierposition angefördert und danach über eine Abfordervorrichtung der zweiten Fördertechnik wieder von der Kommissionierposition abgefördert. Die Quell-Ladehilfsmittel und Ziel-Ladehilfsmittel werden im Arbeitsbereich der Kommissionierperson in einem rechten Winkel zueinander bereitgestellt. Dies bedingt zweitintensive Umsetzvorgänge für Quell-Ladehilfsmittel und Ziel-Ladehilfsmittel. Dadurch leidet die Kommissioniereffizienz bzw. Durchsatzleistung.

Die WO 2012/085271 A1 beschreibt eine Tablar-Handhabungsstation zum manuellen Be- oder Entladen von Stückgütern auf ein oder von einem Tablar, welche eine Tablar-Fördertechnik und eine Packstation umfasst, wobei ein Tablar von der Tablar-Fördertechnik von einem Lagersystem in eine Handhabungsposition im Arbeitsbereich einer Kommissionierperson gefördert und nach dem Be- oder Entladevorgang aus dem Arbeitsbereich zurück zum Lagersystem gefördert wird. In der Packstation wird eine Versandpalette bereitgestellt, auf welche die Stückgüter gestapelt werden. Die Manipulation der Stückgüter zwischen dem Tablar und der Packstation kann unter Zuhilfenahme einer Gleitflächeneinheit unter besonders ergonomischen Aspekten erfolgen.

Der vorliegenden Erfindung liegt die Aufgabe zugrunde, eine kompakt gebaute Kommissionierstation und ein Verfahren zum Kommissionieren von Artikeln aus Quell-Ladehilfsmitteln zu schaffen, bei der bzw. dem auf sehr effiziente und ergonomische Weise kommissioniert werden kann.

Die Aufgabe der Erfindung wird dadurch gelöst, dass die Steuerungsvorrichtung die Förderbewegungen der Quell-Ladehilfsmittel und Ziel-Ladehilfsmittel derart aufeinander abgestimmt koordiniert, dass das für eine Abarbeitung eines Kommissionierauftrages jeweils benötigte Quell-Ladehilfsmittel und Ziel-Ladehilfsmittel vor dem Kommissioniervorgang in der Kommissionierstation auf eine gemeinsame und durch einen Arbeitsbereich der Kommissionierperson hindurchführende Kommissionierfördervorrichtung der ersten Fördertechnik zusammengeführt und als Kommissioniergruppe aneinander gereiht der Kommissionierperson auf der Kommissionierfördervorrichtung bereitgestellt werden.

Ferner wird die Aufgabe der Erfindung durch die Kommissionierstation des Anspruchs 12 gelöst.

Die Quell-Ladehilfsmitteln enthalten sortenreine Artikel. Beispielsweise enthält ein erstes Quell-Ladehilfsmittel den Artikel "A", ein zweites Quell-Ladehilfsmittel den Artikel "B" usw. Andererseits ist es auch möglich, dass ein Quell-Ladehilfsmittel durch Trennwände in mehrere Aufnahmefächer unterteilt ist und unterschiedliche Artikel "A", "B" aufnehmen kann, wobei im ersten Aufnahmefach ein Artikel "A" und im zweiten Aufnahmefach ein Artikel "B" aufgenommen werden kann.

In das Ziel-Ladehilfsmittel wird gemäß einem Kommissionierauftrag ein zu kommissionierender Artikel abgelegt. Ein Kommissionierauftrag kann entweder einen oder mehrere verschiedene Artikel umfassen, die dann in das Ziel-Ladehilfsmittel kommissioniert werden. Die unterschiedlichen Artikel werden entweder aus einem einzigen Quell-Ladehilfsmittel, das verschiedene Artikeltypen in den Aufnahmefächern sortenrein enthält, oder aus mehreren Quell-Ladehilfsmitteln, die jeweils einen einzigen Artikeltyp enthalten, durch eine Kommissionierperson entnommen.

Welche Artikel aus welchen Quell-Ladehilfsmitteln oder Aufnahmefächern zu entnehmen sind, wird der Kommissionierperson gezielt angewiesen. Auch erhält die Kommissionierperson eine Anweisung über die Stückzahl der aus einem oder mehreren Quell-Ladehilfsmitteln zu entnehmenden Artikel. Die Kommissionieranweisung an die Kommissionierperson kann an einer Ausgabeeinheit mit einer optischen Anzeige, beispielsweise "Pick-to-Light"-Anzeige oder Bildschirm, und/oder akustischen Anzeige erfolgen.

Die Kommissionierfördervorrichtung erstreckt sich als durchgehende Förderbahn zwischen einem Einschleusabschnitt, an welchem die Quell-Ladehilfsmittel und Ziel-Ladehilfsmittel auf die Kommissionierfördervorrichtung einschleust werden, und einem Ausschleusabschnitt, an welchem die Quell-Ladehilfsmittel und Ziel-Ladehilfsmittel wieder von der Kommissionierfördervorrichtung ausgeschleust werden. Zwischen dem Einschleusabschnitt und Ausschleusabschnitt befindet sich der Arbeitsbereich, welcher über einen Längenabschnitt der Kommissionierfördervorrichtung ausgebildet ist. Der Arbeitsbereich bildet in Förderrichtung der Kommissionierfördervorrichtung hintereinander zumindest eine erste Kommissionierposition für ein Quell-Ladehilfsmittel und zumindest eine zweite Kommissionierposition für ein Ziel-Ladehilfsmittel aus. Somit sind die Kommissionierpositionen für die Quell- und Ziel-Ladehilfsmitteln von und auf der Kommissionierfördervorrichtung ausgebildet. Ebenso dient die Kommissionierfördervorrichtung der bevorzugt automatisierten gemeinsamen (getakteten) Förderbewegung der Quell- und Ziel-Ladehilfsmitteln von dem Einschleusabschnitt zu den Kommissionierpositionen und weg von den Kommissionierpositionen zu dem Ausschleusabschnitt.

Ein zusätzlicher Puffer für Ziel-Ladehilfsmittel, welcher unterhalb der Kommissionierfördervorrichtung vorgesehen ist, ist nicht erforderlich. Die Kommissionierstation umfasst demnach ausschließlich eine einzige Kommissionierfördervorrichtung.

Auch ist von Vorteil, dass die Kommissionierfördervorrichtung durch eine standardisierte Fördertechniktechnologie realisiert werden kann, die sehr flexibel und leistungsangepasst betrieben werden kann.

Die Quell- und Ziel-Ladehilfsmitteln können mit geringem gegenseitigen Abstand oder dicht aneinander gereiht entlang der Kommissionierfördervorrichtung transportiert werden. Dadurch sind besonders kurze Kommissionierwege zwischen dem Quell- und Ziel-Ladehilfsmittel möglich, wenn diese an den Kommissionierpositionen bereitgestellt sind. Dadurch wird die Kommissioniereffizienz gesteigert. Ebenso kann die Durchsatzleistung an Kommissionieraufträgen erhöht werden, wenn die Quell- und Ziel-Ladehilfsmitteln auf der Kommissionierfördervorrichtung bereitgestellt werden, da diese als Kommissioniergruppe durch die Kommissionierstation gemeinsam gefördert werden. Auch kann ein Umsetzen oder Kippen der Quell- und Ziel-Ladehilfsmitteln zwischen unterschiedlichen Höhen- oder Neigungsebenen und dgl. vermieden werden, sodass auch ein sehr geräuscharmer Transport der Quell- und Ziel-Ladehilfsmitteln möglich ist.

Die Quell- und Ziel-Ladehilfsmitteln können in beliebiger Reihenfolge an den Kommissionierpositionen bereitgestellt werden. Sind ein Quell-Ladehilfsmittel und ein Ziel-Ladehilfsmittel in der Kommissioniergruppe, so kann das Quell-Ladehilfsmittel relativ zur Förderrichtung an der vorderen Kommissionierposition und das Ziel-Ladehilfsmittel relativ zur Förderrichtung an der hinteren Kommissionierposition oder umgekehrt bereitgestellt werden. Gleiches gilt, wenn sich in der Kommissioniergruppe ein Quell-Ladehilfsmittel und zwei Ziel-Ladehilfsmittel oder zwei Quell-Ladehilfsmittel und ein Ziel-Ladehilfsmittel befinden. Enthält die Kommissioniergruppe zwei Quell-Ladehilfsmittel und zwei Ziel-Ladehilfsmittel, so können diese abwechselnd oder gruppiert nach Quell-Ladehilfsmittel und Ziel-Ladehilfsmittel an den Kommissionierpositionen bereitgestellt werden. Daraus wird ersichtlich, dass eine hohe Flexibilität in der Bereitstellung und Kommissionierung von Quell- und Ziel-Ladehilfsmitteln besteht. Damit kann eine "leistungsangepasste" und "ergonomischen" Kommissionierung realisiert werden.

Von Vorteil ist auch, wenn die Quell-Ladehilfsmittel und Ziel-Ladehilfsmittel gemäß einem Kommissionierauftrag in einem Einschleusabschnitt vor der Kommissionierstation auf die gemeinsame Kommissionierfördervorrichtung zusammengeführt werden. Die Quell-Ladehilfsmittel und Ziel-Ladehilfsmittel werden in einem Ausschleusabschnitt nach der Kommissionierstation wieder vereinzelt auf der zweiten Fördertechnik, insbesondere eine die zweite Fördertechnik umfassende Abliefer-Fördertechnik und eine Rücklager-Fördertechnik oder Entsorgungsförder-Technik gefördert. Die räumliche Trennung des Einschleusabschnittes vom Arbeitsbereich schafft ein ergonomisches Arbeitsumfeld für die Kommissionierperson. Quell-Ladehilfsmittel, welche nach dem Kommissioniervorgang noch Artikel enthalten, werden von der Rücklager-Fördertechnik getrennt von den Ziel-Ladehilfsmitteln wieder in das Artikellager rückgelagert.

Nach einer Maßnahme der Erfindung werden die Quell-Ladehilfsmittel und/oder Ziel-Ladehilfsmittel auf einer Bereitstellfördervorrichtung, welche vor der Kommissionierstation an die Kommissionierfördervorrichtung angeschlossen ist, bereitgestellt und gemäß Kommissionieraufträgen in der entsprechenden Anzahl auf die Kommissionierfördervorrichtung eingeschleust. Dadurch wird eine unterbrechungsfreie Versorgung der Kommissionierstation mit Quell-Ladehilfsmitteln und/oder Ziel-Ladehilfsmitteln und damit eine hohe Durchsatzleistung an der Kommissionierstation sichergestellt.

Es ist auch von Vorteil, wenn die Quell-Ladehilfsmitteln jeweils über einen an diesen angeordneten Datenträger vor dem Einschleusen der Ziel-Ladehilfsmittel auf die Kommissionierfördervorrichtung an einer Erfassungsvorrichtung vorbeibewegt und von der elektronischen Steuerungsvorrichtung anhand des Datenträgers identifiziert werden. Durch die Identifikation jedes Quell-Ladehilfsmittels vor dem Einschleusabschnitt können diese den in der Steuerungsvorrichtung erfassten Kommissionieraufträgen zugeordnet werden und dementsprechend wird von der Steuerungsvorrichtung für einen Kommissionierauftrag ermittelt, welche Artikel in welcher Anzahl benötigt werden. Der Steuerungsvorrichtung ist basierend auf der Identifikation auch bekannt, welches Quell-Ladehilfsmittel welche Artikel enthält und berechnet ihrerseits die Anzahl an Ziel-Ladehilfsmitteln. Somit kann die Steuerungsvorrichtung ermitteln, einerseits in welcher Anzahl Ziel-Ladehilfsmittel und andererseits in welcher Anzahl welche Quell-Ladehilfsmittel benötigt werden. Vor diesem Hintergrund kann nun die Steuerungsvorrichtung die Förderbewegungen bzw. die Bereitstellung von Quell-Ladehilfsmittel und Ziel-Ladehilfsmittel koordinieren.

Die Steuerungsvorrichtung ermittelt nach Identifikation des Quell-Ladehilfsmittels für einen diesem zugeordneten Kommissionierauftrag eine Anzahl an benötigten Ziel-Ladehilfsmitteln und dementsprechend wird die Anzahl an Ziel-Ladehilfsmitteln auf die Kommissionierfördervorrichtung eingeschleust und gemeinsam mit dem Quell-Ladehilfsmittel auf der Kommissionierfördervorrichtung gefördert, wobei das Quell-Ladehilfsmittel und die Anzahl an Ziel-Ladehilfsmitteln die Kommissioniergruppe bilden. Die Quell-Ladehilfsmittel werden zuvor auf der Bereitstellfördervorrichtung bis vor den Einschleusabschnitt, welcher zwischen der Bereitstellfördervorrichtung und der Kommissionierfördervorrichtung angeordnet ist, gefördert, wobei im Einschleusabschnitt beispielweise zwischen aufeinander folgenden Quell-Ladehilfsmitteln ein solcher Lückenabstand gebildet wird, dass die Ziel-Ladehilfsmitteln in der entsprechenden Anzahl in die Lücke zwischen die Quell-Ladehilfsmitteln bewegt werden können.

Ist ein Kommissionierauftrag erfasst, bei dem unterschiedliche Artikel aus unterschiedlichen Quell-Ladehilfsmitteln benötigt werden, so erweist es sich von Vorteil, wenn die Steuerungsvorrichtung nach Identifikation eines ersten Quell-Ladehilfsmittels für einen diesem zugeordneten Kommissionierauftrag zumindest ein zweites Quell-Ladehilfsmittel für diesen Kommissionierauftrag sowie eine Anzahl an benötigten Ziel-Ladebilfsmittel ermittelt, wobei das erste Quell-Ladehilfsmittel, das zweite Quell-Ladehilfsmittel und die Anzahl an Ziel-Ladehilfsmittel gemeinsam auf der Kommissionierfördervorrichtung gefördert werden, wobei die Quell-Ladehilfsmitteln und die Anzahl an Ziel-Ladehilfsmitteln die Kommissioniergruppe bilden. Es kann bloß ein einziges Ziel-Ladehilfsmittel oder können mehrere Ziel-Ladehilfsmittel erforderlich sein. Die Kommissionierperson kann die für einen Kommissionierauftrag benötigten Artikel aus den Quell-Ladehilfsmitteln entnehmen und in das/die Ziel-Ladehilfsmittel(n) ablegen.

Werden auch die Ziel-Ladehilfsmitteln jeweils über einen an diesen angeordneten Datenträger vor dem Einschleusen an einer Erfassungsvorrichtung vorbeibewegt und von einer Steuerungsvorrichtung anhand des Datenträgers identifiziert, kann eine Zuordnung zumindest eines Ziel-Ladehilfsmittels zu einem Kommissionierauftrag erfolgen.

Werden die Quell-Ladehilfsmitteln und/oder Ziel-Ladehilfsmitteln vor dem Einschleusabschnitt auf einer Bereitstellfördervorrichtung in nach Kommissionieraufträgen sortierter Reihenfolge bereitgestellt, kann auch ein Kommissionierauftrag mit einer hohen Anzahl an unterschiedlichen Artikeln auf sehr einfache Weise abgearbeitet werden.

Wird nach einer möglichen Maßnahme zumindest ein Ziel-Ladehilfsmittel im Arbeitsbereich der Kommissionierperson von der Kommissionierfördervorrichtung auf einen dazu seitlich angeordneten Abstellbahnhof, welcher im Arbeitsbereich an die Kommissionierfördervorrichtung angeschlossen ist, in zumindest eine Pufferposition auf einem Abstellplatz ausgeschleust und nach zumindest einem Kommissioniervorgang aus der Pufferposition wieder auf die Kommissionierfördervorrichtung eingeschleust, so kann auch bei einem Kommissionierauftrag mit einer hohen Anzahl an unterschiedlichen Artikeln und dementsprechend einer hohen Anzahl an Quell-Ladehilfsmitteln auf einem räumlich kleinen Arbeitsbereich kommissioniert werden. Die Quell-Ladehilfsmitteln, beispielweise fünf Quell-Ladehilfsmittel werden nacheinander am auf dem Abstellplatz "zwischengeparkten" Ziel-Ladehilfsmittel vorbeibewegt und auf einer relativ zum Abstellbahnhof stromabwärts vorgesehenen Kommissionierposition bereitgestellt. Andererseits können ein erstes Quell-Ladehilfsmittel auf einer relativ zum Abstellbahnhof stromabwärts vorgesehenen (ersten) Kommissionierposition und ein zweites Quell-Ladehilfsmittel auf einer relativ zum Abstellbahnhof stromaufwärts vorgesehenen (zweiten) Kommissionierposition bereitgestellt werden. Zwischen den Kommissionierpositionen für die Quell-Ladehilfsmittel bleibt zum Kommissionieren eine Kommissionierposition für das Ziel-Ladehilfsmittel frei. Ist der erste "Teilkommissioniervorgang" beispielweise von einem Artikel "A" und Artikel "B" abgeschlossen und werden auch noch die Artikel "C" und Artikel "D" im Ziel-Ladehilfsmittel benötigt, wird das Ziel-Ladehilfsmittel auf den Abstellbahnhof ausgeschleust, das erste und zweite Quell-Ladehilfsmittel abgefördert. Danach werden das dritte und vierte Quell-Ladehilfsmittel nachgefördert, wobei das dritte Quell-Ladehilfsmittel am "zwischengeparkten" Ziel-Ladehilfsmittel vorbeibewegt wird. Danach wird der zweite "Teilkommissioniervorgang" der Artikel "C" und Artikel "D" durchgeführt, wie beschrieben. Der Kommissioniervorgang wiederholt sich solange, bis alle Artikel "A bis E" im Ziel-Ladehilfsmittel abgelegt wurden.

Sind gemäß einer Ausführung oberhalb der Kommissionierfördervorrichtung und in dessen Längsrichtung an einem Rahmen der Kommissionierstation verstellbar gelagerte "flächige" Abdeckungen vorgesehen, welche einen Arbeitsbereich für die Kommissionierperson begrenzen, kann sich die Kommissionierperson auf den Kommissioniervorgang "konzentrieren" und wird nicht durch den Bereitstellvorgang einer neuerlichen Kommissioniergruppe abgelenkt. Dadurch wird eine fehlerarme bzw. fehlerfreie Kommissionierung ermöglicht.

Die beschriebene Kommissionierstation kann mit Vorteil in einem automatisierten Lagersystem integriert werden.

Zum besseren Verständnis der Erfindung wird diese anhand der nachfolgenden Figuren näher erläutert.

Es zeigen jeweils in stark schematisch vereinfachter Darstellung:
- Fig. 1: ein Lagersystem mit Kommissionier-Arbeitsplätzen, in Draufsicht;
- Fig. 2a, 2b: Teilabschnitte der Fördertechniken für die Quellbehälter und Zielbehälter sowie eine erste Ausführung einer Kommissionierstation des Kommissionier-Arbeitsplatzes, in perspektivischer Ansicht;
- Fig. 3a-3e: eine erste Ausführung für einen Bereitstellvorgang von Quellbehälter und Zielbehälter sowie einen Kommissioniervorgang in aufeinander folgenden Verfahrensschritten;
- Fig. 4a-4d: eine zweite Ausführung für einen Bereitstellvorgang von Quellbehälter und Zielbehälter in aufeinander folgenden Verfahrensschritten;
- Fig. 5a-5e: eine dritte Ausführung für einen Bereitstellvorgang von Quellbehälter und Zielbehälter in aufeinander folgenden Verfahrensschritten;
- Fig. 6: eine zweite Ausführung einer Kommissionierstation, in Draufsicht;
- Fig. 7: eine dritte Ausführung einer Kommissionierstation, in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Im nachfolgenden wird die Erfindung im Zusammenhang mit Behältern beschrieben. Der Begriff "Behälter" ist nicht beschränkend anzusehen, sondern soll vielmehr als Beispiel für eine Vielzahl von möglichen Ladehilfsmitteln, wie beispielweise Tablar, Palette, Kartonage, usw. verstanden werden, die verwendet werden können, um Artikel bzw. Kommissioniergut zu lagern und zu transportieren.

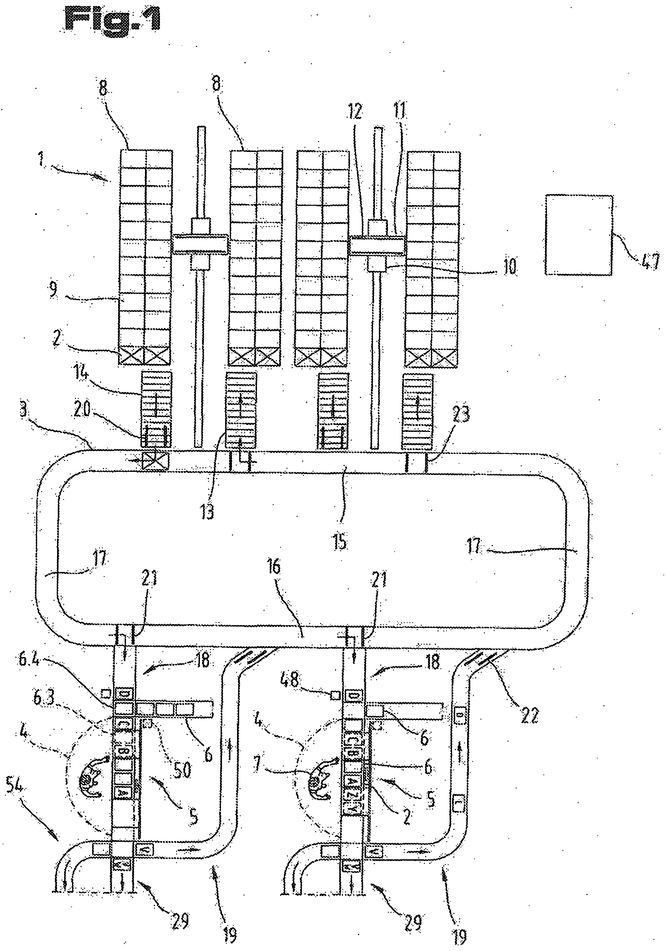

Das in Fig. 1 gezeigte Lagersystem umfasst ein Artikellager 1, eine automatisierte Fördertechnik zur Einlagerung von Quellbehältern 2 in das Artikellager 1 bzw. Auslagerung von Quellbehältern 2 aus dem Artikellager 1, ein automatisiertes Verteilsystem 3, zumindest einen Kommissionier-Arbeitsplatz 4 mit einer Kommissionierstation 5 zum Kommissionieren von Artikeln aus zumindest einem Quellbehälter 2 in zumindest einen Zielbehälter 6 durch eine Kommissionierperson 7. Die Anzahl der Kommissionier-Arbeitsplätze 4 kann abhängig vom Artikelsortiment und/oder Durchsatzleistung variieren.

Ist eine besonders hohe Durchsatzleistung bzw. Kommissionierleistung gefordert, so kann das Lagersystem mehrere Kommissionier-Arbeitsplätze 4 mit jeweils einer Kommissionierstation 5 zum Kommissionieren von Artikeln aus zumindest einem Quellbehälter 2 in zumindest einen Zielbehälter 6 durch eine Kommissionierperson 7 umfassen.

Das Artikellager 1 weist parallel angeordnete Lagerregale 8 auf, in denen in übereinander liegenden Regalebenen die Quellbehälter 2 auf einfach oder, wie gezeigt, doppelt tiefen Stellplätzen 9 gelagert sind. Zwischen den Lagerregalen 8 ist jeweils eine Regalgasse ausgebildet, in der zumindest ein rechnergesteuertes Regalförderfahrzeug 10 auf Schienen verfahrbar ist. Nach gezeigter Ausführung ist das Regalförderfahrzeug 10 mit einem Vertikalmast, einer am Vertikalmast heb- und senkbar gelagerten Plattform 11 und mit einer schematisch angedeuteten Lastaufnahmevorrichtung 12 ausgestattet, mittels welcher die Quellbehälter 2 ein- und ausgelagert werden können. Jedes Regalfahrzeug 10 bedient zwei gegenüberliegende Lagerregale 8.

Nach einer anderen (nicht gezeigten) Ausführung ist es auch möglich, dass das Artikellager 1 in den Regalebenen jeweils an den Lagerregalen 8 befestigte und entlang der Regalgasse verlaufende Führungsschienen und in zumindest einigen der Regalebenen auf den Führungsschienen verfahrbare, autonome Einebenenregalbediengeräte (Shuttle) zum Transport der Quellbehälter 2 zu den Stellplätzen 9 umfasst, wobei das Einebenenregalbediengerät mit der Lastaufnahmevorrichtung 12 ausgestattet, mittels welcher die Quellbehälter 2 ein- und ausgelagert werden können. Das Einebenenregalbediengerät bildet dabei das Regalförderfahrzeug.

Die Regalgasse ist an ihrem stirnseitigen Ende mit einer Einlagerbahn 13 und Auslagerbahn 14 versehen, welche sich in der Verlängerung der Lagerregale 8 erstrecken. Auf der Einlagerbahn 13, beispielweise ein Rollenförderer, Bandförderer, und dgl., werden Quellbehälter 2 angeliefert und danach auf das Regalförderfahrzeug 10 übergeben.

Auf der Auslagerbahn 14, beispielweise ein Rollenförderer, Bandförderer, und dgl., werden Quellbehälter 2 abgefördert, welche zuvor vom Regalförderfahrzeug 10 auf die Auslagerbahn 14 abgegeben werden.

Der Kommissionier-Arbeitsplatz 4 bzw. die Kommissionier-Arbeitsplätze 4 sind über das automatisierte Verteilsystem 3 mit dem Artikellager 1 verbunden. Das Verteilsystem 3 umfasst eine Förderumlaufbahn mit sich senkrecht zu den Regalgassen erstreckenden und in entgegengesetzte Richtungen transportierenden, geradlinigen Förderbahnabschnitten 15, 16 und diese endseitig verbindenden Förderbahnabschnitten 17. Die Förderumlaufbahn ist beispielsweise durch einen Rollenförderer, Bandförderer, Kettenförderer und dgl. gebildet.

Die Einlager- und Auslagerbahnen 13, 14 sind am ersten Förderbahnabschnitt 15 des Verteilsystems 3 angeschlossen. Der jeweilige Kommissionier-Arbeitsplatz 4 bzw. die jeweilige Kommissionierstation 5 ist über eine automatisierte Auslager-Fördertechnik 18 für jene Quellbehälter 2, die für einen Kommissionierauftrag benötigte Artikel A, B, C, D usw., und aus dem Artikellager 1 angefordert werden, und eine automatisierte Rücklager-Fördertechnik 19 für jene Quellbehälter 2, die nach einem Kommissioniervorgang noch teilweise mit Artikeln V, C, D usw. befüllt sind, an das Verteilsystem 3, insbesondere den zweiten Förderbahnabschnitt 16 angeschlossen.

Die für einen Kommissionierauftrag benötigten und am ersten Verteilsystem 3 angeförderten Quellbehälter 2 werden vorerst aus dem Artikellager 1 ausgelagert und über eine Einschleusvorrichtung 20 auf das Verteilsystem 3 automatisch übergeben. Danach wird der Quellbehälter 2 vom Verteilsystem 3 gefördert und an der jeweiligen Kommissionierstation 5 über eine Ausschleusvorrichtung 21 automatisch vom Verteilsystem 3 auf die Auslager-Fördertechnik 18 übergeben.

Noch teilweise befüllte Quellbehälter 2 werden vorerst über eine Einschleusvorrichtung 22 automatisch von der Rücklager-Fördertechnik 19 auf das Verteilsystem 3 übergeben. Danach wird der Quellbehälter 2 vom Verteilsystem 3 gefördert und an der jeweiligen Einlagerbahn 13 über eine Ausschleusvorrichtung 23 automatisch vom Verteilsystem 3 auf die Einlagerbahn 13 übergeben.

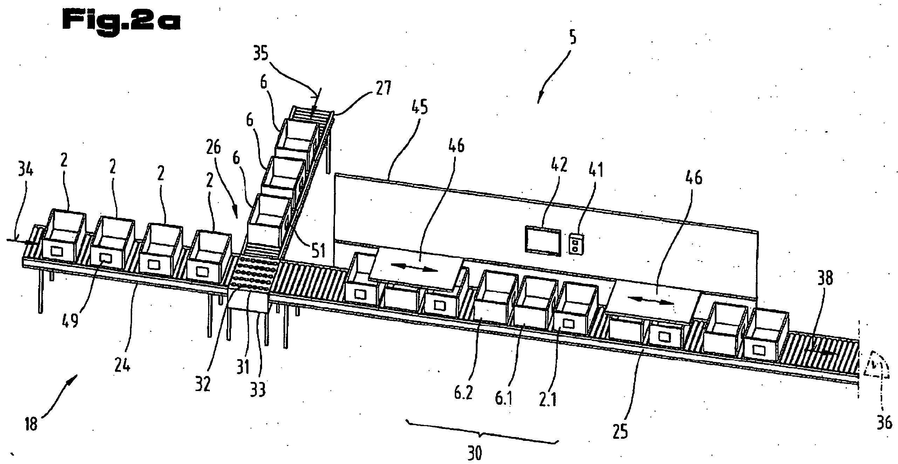

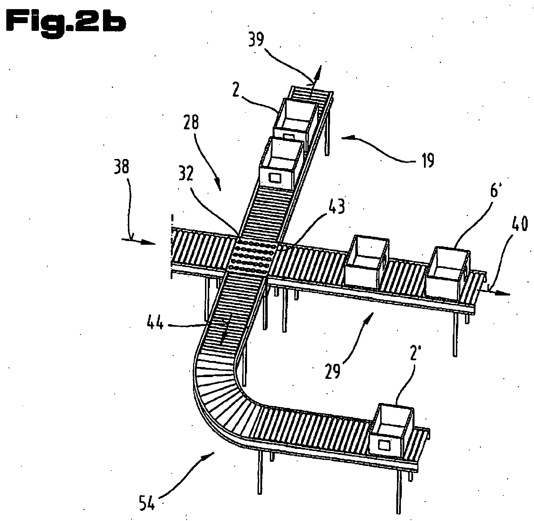

In den Fig. 2a und 2b ist die Kommissionierstation 5 dargestellt, welche an die Fördertechniken 18, 19 zum Antransport von Quell- und Auftragsbehältern 2, 6 zur Kommissionierstation 5 und zum Abtransport von Quell- und Auftragsbehältern 2, 6 von der Kommissionierstation 5 angeschlossen ist.

Die Fördertechnik 18 umfasst eine Bereitstellfördervorrichtung 24 für Quellbehälter 2 und eine automatisierte Kommissionierfördervorrichtung 25 für Quell- und Zielbehälter 2, 6, wobei einerseits in einem Einschleusabschnitt 26 an die Fördertechnik 18 eine Bereitstellfördervorrichtung 27 für zu kommissionierende Zielbehälter 6 und andererseits in einem Ausschleusabschnitt 28 an die Fördertechnik 18 die Rücklager-Fördertechnik 19 sowie eine automatisierte Abliefer-Fördertechnik 29 für fertiggestellte Zielbehälter 6' anschließen. Die Abliefer-Fördertechnik 29 kann zu einem (nicht dargestellten) Konsolidierungslager oder (nicht dargestellten) Warenausgang führen. Auch kann in einem Ausschleusabschnitt 28 an die Fördertechnik 18 eine Entsorgungs-Fördertechnik 54 angeschlossen sein.

Der Einschleusabschnitt 26, in welchem zu kommissionierenden Zielbehälter 6 von der Bereitstellfördervorrichtung 27 auf die Kommissionierfördervorrichtung 25 einschleusbar sind, ist vor der Kommissionierstation 5 vorgesehen, sodass durch einen Arbeitsbereich 30 für die Kommissionierperson 7 (Fig.1) ausschließlich die Kommissionierfördervorrichtung 25 verläuft, auf welcher sowohl die Quellbehälter 2 als auch die Zielbehälter 6 gefördert werden. Der Arbeitsbereich 30 kann durch eine Armreichweite der Kommissionierperson 7 definiert sein, wobei die Kommissionierperson 7 im Arbeitsbereich 30 arbeitet. Die Kommissionierfördervorrichtung 25 durchquert den Arbeitsbereich 30.

Die Kommissionierfördervorrichtung 25 erstreckt sich somit durch den Arbeitsbereich 30 zwischen dem Einschleusabschnitt 26 und dem Ausschleusabschnitt 28. Diese ermöglicht einen taktweisen gemeinsamen Transport von Quellbehälter 2 und Zielbehälter 6.

Zum Kommissionieren werden der Kommissionierperson 7 der Quellbehälter 2 in einer Kommissionierposition für Quellbehälter 2 und der Zielbehälter 6 in einer Kommissionierposition für Zielbehälter 6 bereitgestellt. In der Kommissionierposition für Quellbehälter 2 können aus dem Quellbehälter 2 Artikel entnommen werden. In der Kommissionierposition für Zielbehälter 6 können die aus dem Quellbehälter 2 entnommenen Artikel in den Zielbehälter 6 gelegt werden.

Zum Fördern und Einschleusen der Quellbehälter 2 und der zu kommissionierenden Zielbehälter 6 auf die Kommissionierfördervorrichtung 25 wird nach gezeigter Ausführung eine Einschleusvorrichtung 31 eingesetzt. Die Einschleusvorrichtung 31 umfasst um eine horizontale Achse drehbar gelagerte Rollen 32, von welchen zumindest einige angetrieben sind und die in einem Rahmen 33 um eine vertikale Achse schwenkbar gelagert und mit einem Schwenkantrieb (nicht gezeigt) gekoppelt sind. Die Rollen 32 sind zwischen einer ersten Übernahmestellung mit parallel zur Förderrichtung 34 der Bereitstellördervorrichtung 24 verlaufender Förderrichtung und einer zweiten Übernahmestellung mit parallel zur Förderrichtung 35 der Bereitstellfördervorrichtung 27 verlaufender Förderrichtung um 90° schwenkbar.

Eine beispielhafte Ausführung für eine Einschleusvorrichtung 31 und der konstruktive Aufbau der Einschleusvorrichtung 31 sind in der österreichischen Patentanmeldung A 1211/2010 offenbart.

Zum Fördern und Einschleusen der zu kommissionierenden Zielbehälter 6 kann aber auch eine nicht gezeigte Ausführung einer Einschleusvorrichtung verwendet werden, welche durch einen zwischen einer Förderstellung oberhalb einer horizontalen Förderebene 36 anhebbare und einer Ausgangsstellung unterhalb einer Förderebene 36 absenkbare Riemenumsetzer gebildet ist. Die Förderebene 36 wird von der Kommissionierfördervorrichtung 25 ausgebildet. Der Riemenumsetzer ist in der Bereitstellfördervorrichtung 27 für Zielbehälter 6 endseitig integriert und kreuzt die Bereitstellfördervorrichtung 24 für Quellbehälter 2. Die Kommissionierfördervorrichtung 25 ist in diesem Fall beispielweise eine Rollenförderbahn.

Andererseits kann die Einschleusvorrichtung auch durch einen mittels eines Stellantriebes betätigbaren Schieber gebildet sein, mittels welchem ein Zielbehälter 6 von der Bereitstellfördervorrichtung 27 auf die Kommissionierfördervorrichtung 25 eingeschleust werden kann.

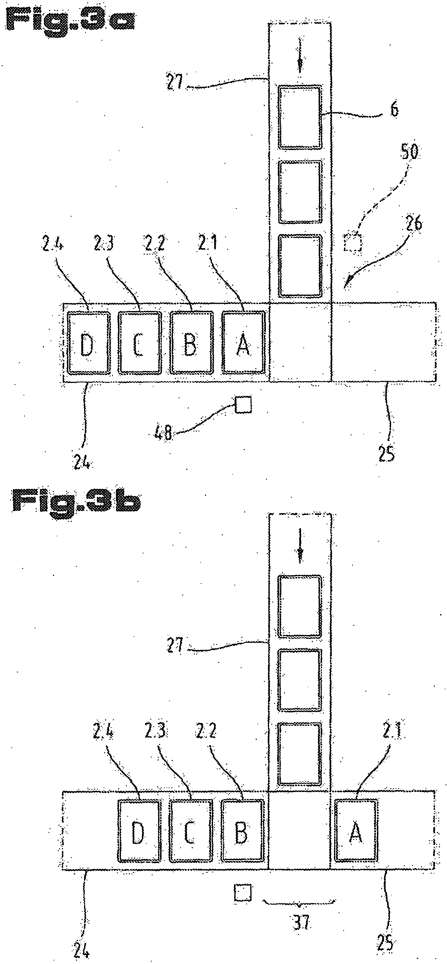

Zum Fördern und Einschleusen der zu kommissionierenden Zielbehälter 6 kann aber auch eine (nicht dargestellte) Vereinzelungsvorrichtung an der Fördertechnik 18 eingesetzt werden. Dabei bilden die Quellbehälter-Bereitstellfördervorrichtung 24 und Kommissionierfördervorrichtung 25 eine durchgehende Förderbahn, welche beispielweise als Rollenbahn gestaltet ist, wobei die Quellbehälter-Bereitstellfördervorrichtung 24, die Kommissionierfördervorrichtung 25 und der zwischen diesen angeordnete Einschleusabschnitt 26 jeweils Fördersegmente ausbilden, die mit variabler Fördergeschwindigkeit betrieben werden können. Die Quellbehälter 2 können so beschleunigt oder verlangsamt transportiert werden, dass eine Lücke 37 (Fig. 3b) in der Reihenfolge der Quellbehälter 2 eingestellt werden kann. Die Lücke 37 bzw. der Lückenabstand zwischen aufeinander folgenden Quellbehältern 2 ist so groß, dass zwischen den Quellbehältern 2 ein Zielbehälter 6 von der Zielbehälter-Bereitstellfördervorrichtung 27 auf die Förderbahn bzw. Kommissionierfördervorrichtung 25 eingeschleust werden kann.

Die Quellbehälter-Bereitstellfördervorrichtung 24, die Kommissionierfördervorrichtung 25 und die Zielbehälter-Bereitstellfördervorrichtung 27 sind Staubahnen (Pufferbahnen) und beispielweise als Staurollenförderer, Staugurtförderer und dgl. gestaltet, wobei die Staubahnen in Förderrichtung 34, 35, 38 jeweils hintereinander eine Vielzahl von Stauplätzen ausbilden. Jeder Stauplatz ist derart dimensioniert, dass auf diesem ein Quellbehälter 2 bzw. Zielbehälter 6 Platz findet. Im Arbeitsbereich 30 bildet jeweils ein Stauplatz eine Kommissionierposition für den Quellbehälter 2 bzw. Zielbehälter 6 aus. Bevorzugt werden Staurollenförderer eingesetzt, welche je Stauplatz mehrere Förderrollen umfassen, wobei zumindest eine der Förderrollen je Stauplatz eine motorisierte Motorrolle ist.

Auch die Rücklager-Fördertechnik 19 und Abliefer-Fördertechnik 29 können Staubahnen (Pufferbahnen) und beispielweise als Staurollenförderer, Staugurtförderer und dgl. gestaltet sein, wobei die Staubahnen in Förderrichtung 39, 40 jeweils hintereinander eine Vielzahl von Stauplätze ausbilden, wie oben beschrieben.

Die Quellbehälter-Bereitstellfördervorrichtung 24, die Kommissionierfördervorrichtung 25, die Zielbehälter-Bereitstellfördervorrichtung 27, die Rücklager-Fördertechnik 19, die Abliefer-Fördertechnik 29 und/oder die Entsorgungs-Fördertechnik 54 sind angetrieben, um einen automatischen Behälterwechsel bzw. Antransport zur Kommissionierstation 5 und Abtransport von der Kommissionierstation 5 zu ermöglichen.

Wie in Fig. 2a auch ersichtlich, umfasst die Kommissionierstation 5 zumindest eine Eingabeeinheit 41 und zumindest eine Ausgabeeinheit 42. Die Eingabeeinheit 41 ist beispielsweise eine Tastatur oder Quittiertaste, mit welcher das Ende eines Kommissioniervorganges bestätigt werden kann. Die Ausgabeeinheit 42 umfasst eine optische und/oder akustische Anzeige, beispielsweise einen Bildschirm, mit welcher die Anzahl der aus dem Quellbehälter 2 zu entnehmenden Artikel angezeigt werden kann.

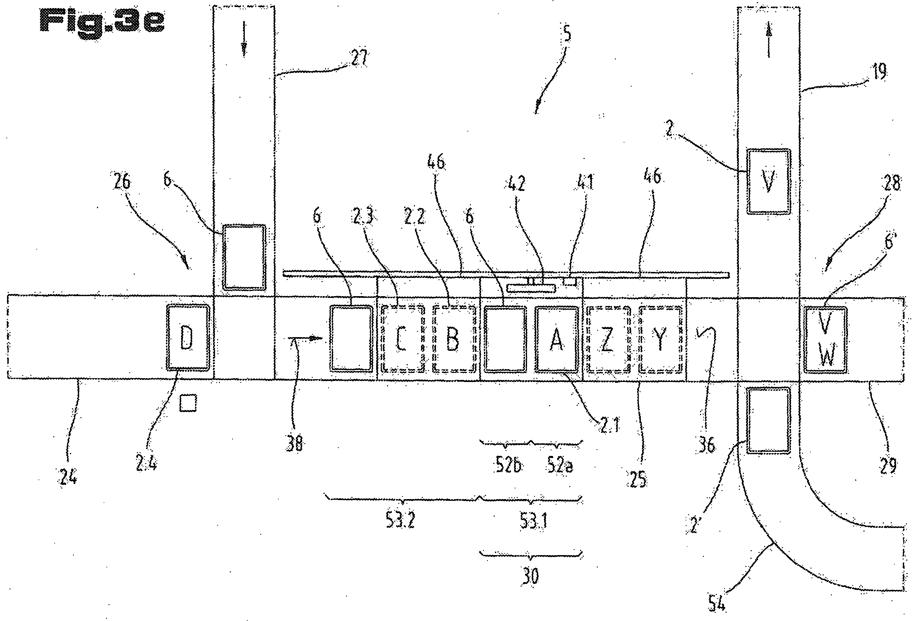

Nach dem Ende des Kommissioniervorganges werden die Quell- und Zielbehälter 2, 6 aus ihren Kommissionierpositionen 52a, 52b (Fig. 3e) auf der Kommissionierfördervorrichtung 25 in Förderrichtung 38 abgefördert und außerhalb des Arbeitsbereiches 30 aus der Kommissionierfördervorrichtung 25 auf die Abliefer-Fördertechnik 29 und entweder auf die Rücklager-Fördertechnik 19 oder gegebenenfalls, sofern vorhanden, eine Entsorgungs-Fördertechnik 54 ausgeschleust.

Die Entsorgungs-Fördertechnik 54 ist an die Kommissionierfördervorrichtung 25 vorzugsweise im Ausschleusabschnitt 28 angeschlossen und dient dazu, entleerte Quellbehälter 2', aus denen nach zumindest einem Kommissioniervorgang alle Artikel entnommen wurden, vom Arbeitsbereich 30 abzufördern. Entleere Quellbehälter 2' können auch als Zielbehälter 6 verwendet werden, wozu diese der Bereitstellungsfördervorrichtung 27 automatisch oder manuell zugeführt werden.

Die Rücklager-Fördertechnik 19 ist an die Kommissionierfördervorrichtung 25 vorzugsweise im Ausschleusabschnitt 28 angeschlossen und dient dazu, Quellbehälter 2, die nach einem Kommissioniervorgang noch Artikel enthalten, vom Arbeitsbereich 30 zum Verteilsystem 3 und von diesem zurück in das Artikellager 1 abzufördern.

Die Abliefer-Fördertechnik 29 ist an die Kommissionierfördervorrichtung 25 vorzugsweise im Ausschleusabschnitt 28 angeschlossen und dient dazu, fertigkommissionierte Zielbehälter 6' vom Arbeitsbereich 30 zu einem (nicht dargestellten) Konsolidierungslager oder (nicht dargestellten) Warenausgang abzufördern.

Zum Fördern und Ausschleusen der Quellbehälter 2; 2' oder Zielbehälter 6; 6' kann, nach gezeigter Ausführung, eine Ausschleusvorrichtung 43 eingesetzt. Die Ausschleusvorrichtung 43 umfasst, wie oben beschrieben, um eine horizontale Achse drehbar gelagerte Rollen 32, von welchen zumindest einige reversibel angetrieben sind und die in einem Rahmen 33 um eine vertikale Achse schwenkbar gelagert und mit einem Schwenkantrieb (nicht gezeigt) gekoppelt sind. Die Rollen 32 sind zwischen einer ersten Übernahmestellung mit parallel zur Förderrichtung 38 der Kommissionierfördervorrichtung 25 verlaufender Förderrichtung und einer zweiten Übernahmestellung mit parallel zur Förderrichtung 39,44 der Rücklager-Fördertechnik 19 bzw. gegebenenfalls der Entsorgungs-Fördertechnik 54 verlaufender Förderrichtung um 90° schwenkbar. Durch Drehrichtungsumkehr der Rollen 32 kann ein Quellehälter 2; 2' entweder auf die Rücklager-Fördertechnik 19 oder gegebenenfalls die Entsorgungs-Fördertechnik 54 gefördert werden.

Die Ausschleusvorrichtung 43 entspricht der technischen Ausführung der Einschleusvorrichtung.

Zum Fördern und Ausschleusen der Quell- und Zielbehälter 2, 2', 6' kann aber auch eine nicht gezeigte Ausführung einer Ausschleusvorrichtung verwendet werden, welche durch einen zwischen einer Förderstellung oberhalb einer Förderebene 36 anhebbaren und einer Ausgangsstellung unterhalb einer Förderebene 36 absenkbaren Riemenumsetzer gebildet ist.

Andererseits kann die Ausschleusvorrichtung auch durch mittels Stellantriebe betätigbare Schieber gebildet sein, mittels welcher ein Quell- und Zielbehälter 2, 2', 6' von der Kommissionierfördervorrichtung 25 auf die Abliefer-Fördertechnik 29, die Rücklager-Fördertechnik 19 bzw. gegebenenfalls die Entsorgungs-Fördertechnik 54 ausgeschleust werden kann.

Ferner kann die Kommissionierstation 5 oberhalb der Kommissionierfördervorrichtung 25 und in dessen Längsrichtung an einem ortsfesten Rahmen 45 verstellbar gelagerte "flächige" Abdeckungen 46 umfassen, welche einen Arbeitsbereich 30 für die Kommissionierperson 7 begrenzen. Jede Abdeckung 46 kann zumindest zwei oder drei Behälter vollflächig überdecken. Hierfür ist ein nicht weiters dargestellter Stellantrieb vorgesehen, welcher an eine Steuerungsvorrichtung 47 (Fig. 1) angeschlossen ist. Abhängig von der Anzahl der im Arbeitsbereich 30 auf den Stauplätzen bzw. Kommissionierpositionen 52a, 52b, 52c usw. bereitgestellten Quellbehälter 2 und Zielbehälter 6, wird der Abstand zwischen den Abdeckungen 46 variiert. Die Steuerungsvorrichtung 47 umfasst einen Materialflussrechner. In der Steuerungsvorrichtung 47 können Kommissionieraufträge elektronisch erfasst werden.

Außerdem ist entlang der Bereitstellfördervorrichtung 24 stromaufwärts relativ zum Einschleusabschnitt 26 eine Erfassungsvorrichtung 48 (Fig. 1, 3, 4 und 5) angeordnet, um die Quellbehälter 2 zu identifizieren, welche in die Kommissionierfördervorrichtung 25 einzuschleusen bzw. zu fördern sind. Jeder Quellbehälter 2 ist mit dem Identifikationssystem ausgestattet, welches zumindest einen Datenträger 49 (Fig. 2) umfasst. Der Datenträger 49 kann durch eine Barcodeetikette, einen Transponder, Magnetstreifen oder eine RFID-Etikette (Radio Frequency Identification Device) gebildet sein und sind in diesem vorzugsweise maschinenlesbare Daten hinterlegt bzw. abgespeichert.

Es ist auch möglich, dass entlang der Bereitstellfördervorrichtung 27 stromaufwärts relativ zum Einschleusabschnitt 26 eine Erfassungsvorrichtung 50 angeordnet, wie ausschließlich in den Fig. 1 und 3a in strichlierte Linien eingetragen, um die Zielbehälter 6 zu identifizieren, welche in die Kommissionierfördervorrichtung 25 einzuschleusen bzw. zu fördern sind. Jeder Zielbehälter 6 ist mit einem Identifikationssystem ausgestattet, welches zumindest einen Datenträger 51 (Fig. 2) umfasst. Der Datenträger 51 kann wiederum durch eine Barcodeetikette, einen Transponder, Magnetstreifen oder eine RFID-Etikette (Radio Frequency ldentification Device) gebildet sein und sind in diesem vorzugsweise maschinenlesbare Daten hinterlegt bzw. abgespeichert.

Die Erfassungsvorrichtungen 48, 50 sind beispielsweise Lesegeräte, mit welchen Daten aus einem Identifikationssystem ausgelesen werden können, insbesondere können die Quellbehälter 2 bzw. Zielbehälter 6 eindeutig identifiziert werden. Die Erfassungsvorrichtung 48, 50 ist mit der Steuerungsvorrichtung 47 verbunden.

In den Fig. 3a bis 3e ist ein Kommissionier- und Bereitstellvorgang von Quellbehältern 2 bzw. Zielbehältern 6 in einer ersten Ausführung beschrieben.

Fig. 3a zeigt Quellbehälter 2.1, 2.2, 2.3, 2.4 auf der Bereitstellfördervorrichtung 24 und Zielbehälter 6 auf der Bereitstellfördervorrichtung 27.

Die Quellbehälter 2 werden vom Artikellager 1 über das Verteilsystem 3 angefördert und gegebenenfalls in einer erforderlichen Reihenfolge sortiert und bevorzugt mit Abstand aneinan-der gereiht auf den Stauplätzen bereitgestellt. Die Bereitstellung der Quellbehälter 2 erfolgt basierend auf Kommissionieraufträgen. Es werden für einen in der Steuerungsvorrichtung 47 erfassten Kommissionierauftrag ein oder mehrere Quellbehälter 2 bereitgestellt. Vorzugsweise enthält jeder Quellbehälter 2 sortenrein Artikel, beispielweise der Quellbehälter 2.1 den Artikel "A", der Quellbehälter 2.2 den Artikel "B" usw.

Die Zielbehälter 6 sind bevorzugt leere Behälter und bevorzugt mit Abstand aneinander gereiht auf den Stauplätzen bereitgestellt. Befindet sich in den Zielbehältern 6 bereits Teilkommissionen, so müssen auch die Zielbehälter 6 in einer erforderlichen Reihenfolge sortiert werden.

Es kann noch bevor ein leerer oder teilkommissionierter Zielbehälter 6 im Einschleusabschnitt 26 auf die Kommissionierfördervorrichtung 25 gefördert wird, der Quellbehälter 2.1 identifiziert werden, indem über die Erfassungsvorrichtung 48 die Daten aus dem Datenträger 49 (Fig. 2) ausgelesen werden und der Steuerungsvorrichtung 47 von der Erfassungsvorrichtung 48 ein entsprechendes Signal übermittelt wird, sodass der Quellbehälter 2.1 von der Steuerungsvorrichtung 47 identifiziert werden kann. Die Daten sind beispielweise eine unverwechselbare Ladehilfsmittel-Identifikationsnummer. Basierend auf der Ladehilfsmittel-Identifikationsnummer kann die Steuerungsvorrichtung 47 eine eindeutige Zuordnung eines Quellbehälters 2.1 zu einem Kommissionierauftrag und/oder auf den Artikel (Kommissioniergut) im Quellbehälter 2.1 zurückschließen.

Die Steuerungsvorrichtung 47 kann basierend auf der Identifikation des Quellbehälters 2.1, diesem Quellbehälter 2.1 eindeutig zu einem (elektronisch erfassten) Kommissionierauftrag zuordnen. Zu diesem Kommissionierauftrag wird auch von der Steuerungsvorrichtung 47 die benötigte Anzahl an Zielbehältern 6 ermittelt.

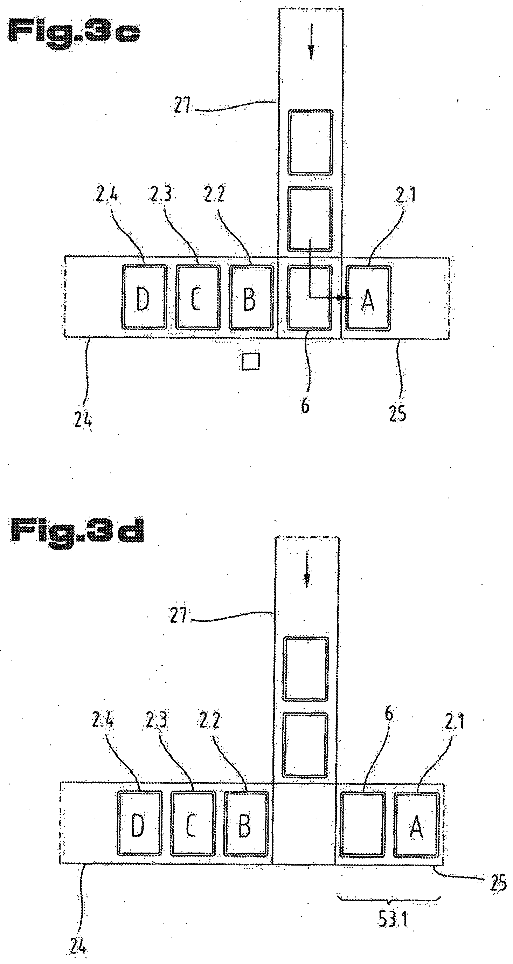

Gemäß dem Ausführungsbeispiel in Fig. 3 ist zu einem Quellbehälter 2.1 ein einziger Zielbehälter 6 erforderlich, daher wird im Arbeitsbereich 30 aus dem einen Quellbehälter 2.1 ein oder mehrere Artikel "A" entnommen und in den Zielbehälter 6 abgelegt.

Entsprechend der ermittelten, benötigten Anzahl an Zielbehältern 6 wird zwischen aufeinan-der folgenden Quellbehältern 2.1, 2.2 über die Einschleusvorrichtung 31 (Fig. 2a) eine Lücke 37 erzeugt, wie in Fig. 3b dargestellt, in welche der Zielbehälter 6 eingeschleust wird, wie in Fig. 3c dargestellt, um anschließend gemeinsam mit dem Quellbehälter 2.1 auf der Kommissionierfördervorrichtung 25 zum Arbeitsbereich 30 bzw. den in Förderrichtung 38 hintereinander liegenden Kommissionierpositionen 52a, 52b im Arbeitsbereich 30 gefördert zu werden, wie in Fig. 3d dargestellt.

Wie daraus ersichtlich wird, wird der Quellbehälter 2.1 von der Bereitstellfördervorrichtung 24 über den Einschleusabschnitt 26 hinweg auf die Kommissionierfördervorrichtung 25 gefördert, während der Zielbehälter 6 von der Bereitstellfördervorrichtung 27 auf den Einschleusabschnitt 26 eingeschleust und von diesem auf die Kommissionierfördervorrichtung 25 gefördert wird.

Befinden sich der Quellbehälter 2.1 und Zielbehälter 6 im Arbeitsbereich 30 bzw. an den Kommissionierpositionen 52a, 52b im Arbeitsbereich 30 kann die Kommissionierperson 7 (Fig. 1) den Kommissioniervorgang durchführen und aus dem Quellbehälter 2.1 einen oder mehrere Artikel "A" entnehmen und in den Zielbehälter 6 abgelegen, wie der Fig. 3e entnehmbar. In Fig. 3e sind auch noch andere Quellbehälter 2 und Zielbehälter 6 eingetragen, welche anderen Kommissionieraufträgen angehören.

Während der Quellbehälter 2.1 und Zielbehälter 6 als Kommisioniergruppe 53.1 (Fig. 3e) auf und von der Kommissionierfördervorrichtung 25 zum Arbeitsbereich 30 gefördert werden, wird bereits die nächste Kommisioniergruppe 53.2 aus den Quellbehältern 2.2, 2.3 und dem Zielbehälter 6 bzw. Quellbehälter 2.4 und Zielbehälter 6 auf oben beschriebene Weise gebildet und nacheinander zum Arbeitsbereich 30 gefördert.

Wie in Fig. 3e ebenso dargestellt, werden die Abdeckungen 46 basierend auf der durch die Steuerungsvorrichtung 47 ermittelten Anzahl an Quell- und Zielbehältern 2, 6 soweit parallel zur Längsrichtung der Kommissionierfördervorrichtung 25 verstellt, dass zwischen ihnen ein Arbeitsbereich 30 begrenzt wird, welcher zumindest der Doppelten Breite eines Quellbehälters 2 bzw. Zielbehälters 6 entspricht.

Für den Kommissioniervorgang wird der Kommissionierperson 7 an der Ausgabeeinheit 42 die Entnahmemenge angezeigt und vom Quellbehälter 2.1 die entsprechende Menge an Artikeln "A" entnommen und in den Zielbehälter 6 kommissioniert. Das Ende des Kommissioniervorganges wird durch die Kommissionierperson 7 an der Eingabeeinheit 41 quittiert.

Nach dem der Kommissioniervorgang abgeschlossen ist, wird der Quellbehälter 2.1 und der Zielbehälter 6 auf und von der Kommissionierfördervorrichtung 25 aus dem Arbeitsbereich 30 abgefördert. Am Ausschleusabschnitt 28 wird nun der Quellbehälter 2.1, sofern er noch Artikel "A" enthält, auf die Rucklager-Fördertechnik 19, oder, sofern er vollständig entleert ist, auf die Entsorgungs-Fördertechnik 54 ausgeschleust. Der fertigkommissionierte Zielbehätter 6', enthaltend den Artikel "A", wird auf die Abliefer-Fördertechnik 29 gefördert. Dies ist jedoch nur anhand der Quell- und Zielbehälter 2, 2', 6' mit den Artikeln "V", "V, W" gezeigt, daher für eine Kommissioniergruppe aus einem vorangegangenen Kommissioniervorgang.

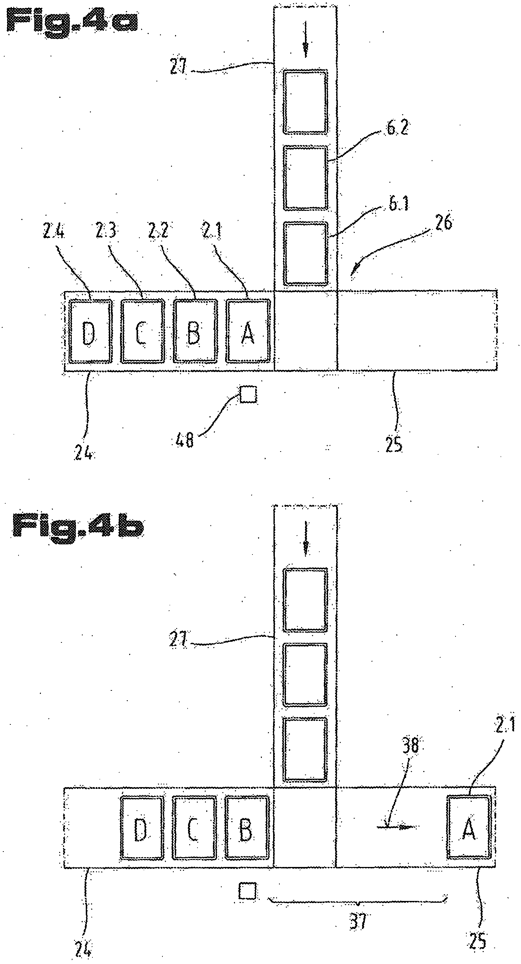

In den Fig. 4a-4d zeigt eine zweite Ausführung für den Kommissionier- und Bereitstellvorgang von Quellbehältern 2 bzw. Zielbehältern 6, und unterscheidet sich von dem Kommissionier- und Bereitstellvorgang gemäß den Fig. 3a-3e nur dadurch, dass die Kommissioniergruppe 53.3 einen Quellbehälter 2.1 und zwei Zielbehältern 6.1, 6.2 umfasst. Der Quellbehälter 2.1 enthält die Artikel "A", welche sowohl in den ersten Zielbehälter 6.1 und zweiten Zielbehälter 6.2 kommissioniert werden soll. Dabei können nach einer ersten Ausführung die Zielbehälter 6.1,6.2 bloß einem Kommissionierauftrag oder nach einer zweiten Ausführung der erste Zielbehälter 6.1 einem ersten Kommissionierauftrag und der zweite Zielbehälter 6.2 einem zweiten Kommissionierauftrag angehören.

Es kann noch bevor ein leerer oder teilkommissionierter Zielbehälter 6 im Einschleusabschnitt 26 auf die Kommissionierfördervorrichtung 25 gefördert wird, der Quellbehälter 2.1 identifiziert werden, indem über die Erfassungsvorrichtung 48 die Daten aus dem Datenträger 49 (Fig. 2) ausgelesen werden und der Steuerungsvorrichtung 47 von der Erfassungsvorrichtung 48 ein entsprechendes Signal übermittelt wird, sodass der Quellbehälter 2.1 von der Steuerungsvorrichtung 47 identifiziert werden kann, wie oben beschrieben.

Die Steuerungsvorrichtung 47 kann basierend auf der Identifikation des Quellbehälters 2.1 diesem Quellbehälter 2.1 eindeutig zu einem (elektronisch erfassten) Kommissionierauftrag zuordnen. Zu diesem Kommissionierauftrag wird auch von der Steuerungsvorrichtung 47 die benötigte Anzahl an Zielbehältern 6.1, 6.2 zu einem Kommissionierauftrag ermittelt. Anderseits kann die Steuerungsvorrichtung 47 auch aus einer Anzahl an erfassten Kommissionieraufträgen jene Kommissionieraufträge auswerten, welche ebenso aus diesem Quellbehälter 2.1 einen Artikel "A" benötigen.

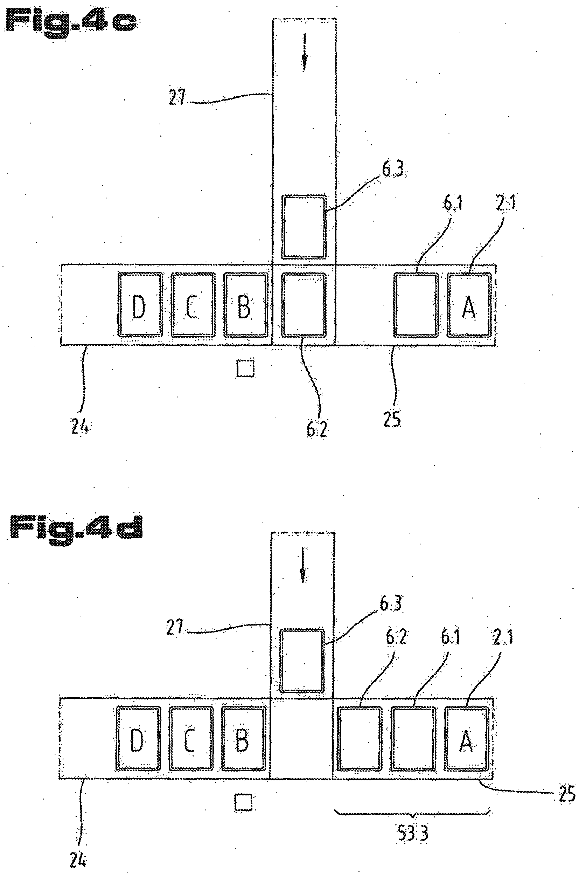

Gemäß dem Ausführungsbeispiel in Fig. 4 sind zu einem Quellbehälter 2.1 zwei Zielbehälter 6.1, 6.2 erforderlich, daher werden im Arbeitsbereich 30 aus dem einen Quellbehälter 2.1 mehrere Artikel "A" entnommen und in die Zielbehälter 6.1, 6.2 in entsprechender Stückzahl abgelegt.

Entsprechend der ermittelten, benötigten Anzahl an Zielbehältern 6 wird zwischen aufeinander folgenden Quellbehältern 2.1, 2.2 über die Einschleusvorrichtung 31 (Fig. 2a) eine Lücke 37 erzeugt, wie in Fig. 4b dargestellt, in welche die Zielbehälter 6.1, 6.2, wie gezeigt, bevorzugt nacheinander, oder, wie nicht dargestellt, gleichzeitig, eingeschleust werden, wie in Fig. 4c dargestellt, um anschließend gemeinsam mit dem Quellbehälter 2.1 auf der Kommissionierfördervorrichtung 25 zum Arbeitsbereich 30 bzw. den in Förderrichtung 38 hintereinander liegenden Kommissionierpositionen 52a, 52b, 52c (nicht eingetragen) im Arbeitsbereich 30 gefördert zu werden, wie in den Fig. 2a und 4d ersichtlich.

Während der Quellbehälter 2.1 und die Zielbehälter 6.1, 6.2 als Kommisioniergruppe 53.3 (Fig. 4d) auf und von der Kommissionierfördervorrichtung 25 zum Arbeitsbereich 30 gefördert, werden bereits die nächsten Kommisioniergruppen 53.4 (nicht eingetragen) aus dem Quellbehälter 2.2 und Zielbehälter 6.3 bzw. Quellbehälter 2.3 und Zielbehälter 6.4 auf oben beschriebene Weise gebildet und nacheinander zum Arbeitsbereich 30 gefördert, wie in den Fig. 1 erkennbar.

Nach dem der Kommissioniervorgang abgeschlossen ist, wird der Quellbehälter 2.1 und die Zielbehälter 6.1, 6.2 auf und von der Kommissionierfördervorrichtung 25 aus dem Arbeitsbereich 30 abgefördert. Am Ausschleusabschnitt 28 wird nun der Quellbehälter 2.1, sofern er noch Artikel "A" enthält, auf die Rücklager-Fördertechnik 19, oder, sofern er vollständig entleert ist, auf die Entsorgungs-Fördertechnik 54 ausgeschleust. Die fertigkommissionierten Zielbehälter 6.1, 6.2, jeweils den Artikel "A" enthaltend, werden auf die Abliefer-Fördertechnik 29 abgefördert.

Wie in Fig. 2a ebenso dargestellt, werden die Abdeckungen 46 basierend auf der durch die Steuerungsvorrichtung 47 ermittelten Anzahl an Quell- und Zielbehälter 2.1, 6.1, 6.2 soweit verstellt, dass zwischen ihnen ein Arbeitsbereich 30 begrenzt wird, welcher zumindest der Dreifachen Breite eines Quellbehälters 2 bzw. Zielbehälters 6 entspricht.

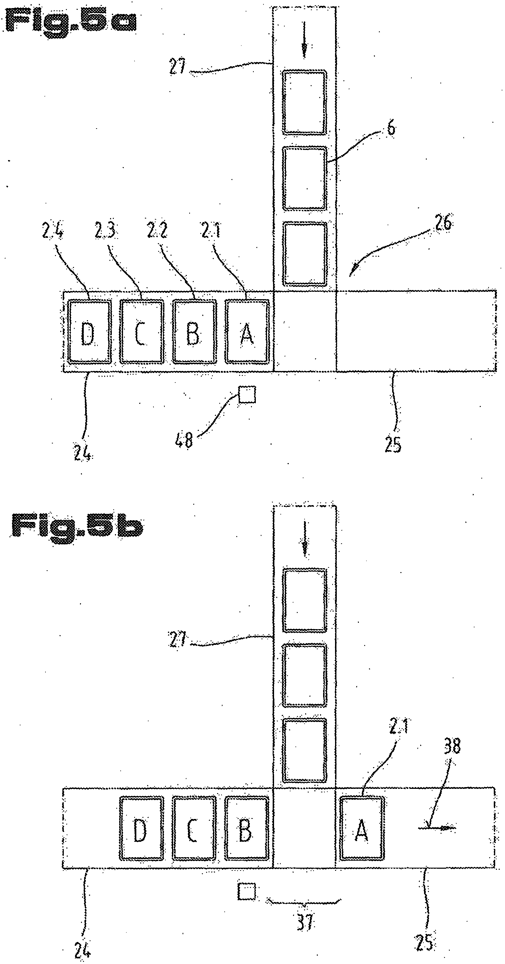

In den Fig. 5a-5d zeigt eine dritte Ausführung für den Kommissionier- und Bereitstellvorgang von Quellbehältern 2 bzw. Zielbehältern 6, und unterscheidet sich von dem Kommissionierund Bereitstellvorgang gemäß den Fig. 3a-3e nur dadurch, dass die Kommissioniergruppe 53.5 zwei Quellbehälter 2.1, 2.2 und einen Zielbehälter 6 umfasst. Ist in der Kommissioniergruppe 53.5 der Zielbehälter 6 zwischen den Quellbehältern 2.1, 2.2. positioniert, ist eine besonders ergonomische Kommissionierung möglich.

Der Quellbehälter 2.1 enthält die Artikel "A", wovon zumindest ein Artikel "A" in den Zielbehälter 6 kommissioniert werden soll, und der Quellbehälter 2.2 enthält die Artikel "B", wovon zumindest ein Artikel "B" in denselben Zielbehälter 6 kommissioniert werden soll. Daraus wird ersichtlich, dass für einen Kommissionierauftrag der zu kommissionierende Zielbehälter 6 Artikel "A, B" aus unterschiedlichen Quellbehältern 2.1, 2.2 erhalten kann.

Es kann noch bevor ein leerer oder teilkommissionierter Zielbehälter 6 im Einschleusabschnitt 26 auf die Kommissionierfördervorrichtung 25 gefördert wird, der Quellbehälter 2.1 in oben beschriebener Weise von der Steuerungsvorrichtung 47 identifiziert werden.

Die Steuerungsvorrichtung 47 kann basierend auf der Identifikation des Quellbehälters 2.1 einen erfassten Kommissionierauftrag aufrufen. Zu diesem Kommissionierauftrag wird von der Steuerungsvorrichtung 47 die benötigte Anzahl an Quellbehältern 2 und Zielbehältern 6 ermittelt.

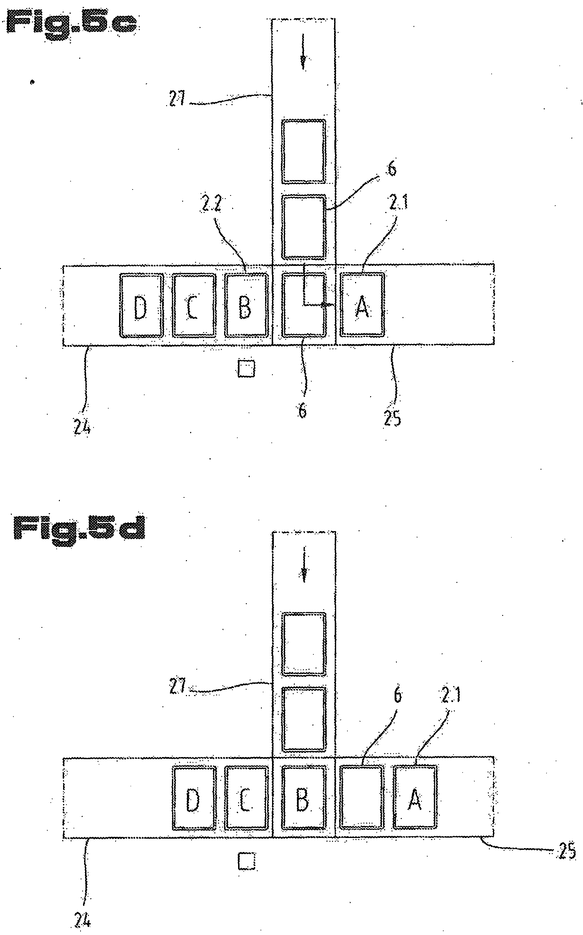

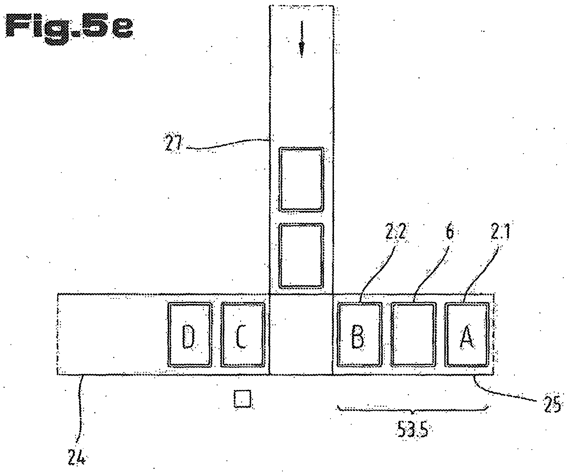

Gemäß dem Ausführungsbeispiel in Fig. 5 sind zu einem Kommissionierauftrag Artikel aus unterschiedlichen Quellbehältern 2.1, 2.2 erforderlich, welche in zumindest einem Zielbehälter 6 hineinkommissioniert werden können. Daher werden im Arbeitsbereich 30 aus den Quellbehältern 2.1, 2.2 ein Artikel "A" und ein Artikel "B" entnommen und in den Zielbehälter 6 in entsprechender Stückzahl abgelegt.

Entsprechend der ermittelten, benötigten Anzahl an Zielbehältern 6 wird zwischen aufeinander folgenden Quellbehältern 2.1, 2.2 über die Einschleusvorrichtung 31 (Fig. 2a) eine Lücke 37 erzeugt, wie in Fig. 5b dargestellt, in welche der Zielbehälter 6 eingeschleust werden, wie in Fig. 5c dargestellt. Dabei wird vorerst der Quellbehälter 2.1 auf die Kommissionierfördervorrichtung 25 gefördert, der Zielbehälter 6 zwischen den Quellbehältern 2.1, 2.2 positioniert, die Quellbehälter 2.1, 2.2 und der Zielbehälter 6 gemeinsam in Förderrichtung 38 gefördert, sodass die Quellbehälter 2.1, 2.2 und der Zielbehälter 6 auf und von der Kommissionierfördervorrichtung 25 gemeinsam als Kommissioniergruppe 53.5 zum Arbeitsbereich 30 bzw. den in Förderrichtung 38 hintereinander liegenden Kommissionierpositionen 52a, 52b, 52c (nicht eingetragen) im Arbeitsbereich 30 gefördert, wie in den Fig. 5d und 5e ersichtlich.

Nach dieser Ausführung ist es notwendig, dass die Quellbehälter 2.1, 2.2 in der für die Kommissionierung erforderlichen (sortierten) Reihenfolge an der Bereitstellfördervorrichtung 24 bereitgestellt werden. Die Sortierung kann im Artikellager 1 beispielweise durch das Regalförderfahrzeug 10 und/oder einen entsprechende Sortiervorrichtung und/oder über das Verteilsystem 3 erfolgen.

Nach dem der Kommissioniervorgang abgeschlossen ist, werden die Quellbehälter 2.1,2.2 und der Zielbehälter 6 auf und von der Kommissionierfördervorrichtung 25 aus dem Arbeitsbereich 30 abgefördert. Am Ausschleusabschnitt 28 werden nun die Quellbehälter 2.1, 2.2, sofern sie noch Artikel "A", "B" enthalten, auf die Rücklager-Fördertechnik 19, oder, sofern sie vollständig entleert sind, auf die Entsorgungs-Fördertechnik 54 ausgeschleust. Der fertigkommissionierte Zielbehälter 6', enthaltend die Artikel "A und B", wird auf die Abliefer-Fördertechnik 29 gefördert.

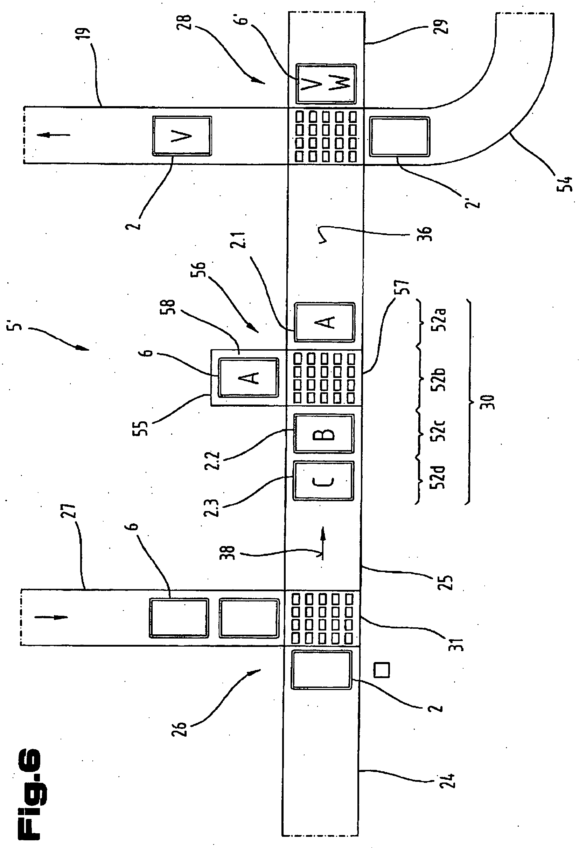

Fig. 6 zeigt einen Teilabschnitt einer modifizierten Ausführung der Kommissionierstation 5', welche zusätzlich zu den beschriebenen Komponenten noch zwischen dem Einschleusabschnitt 26 und Ausschleusabschnitt 28 einen Abstellbahnhof 55 umfasst. Aus Gründen der besseren Übersicht sind der Rahmen 45 und die Abdeckelemente 46 nicht dargestellt. Der Abstellbahnhof 55 ist an die Kommissionierfördervorrichtung 25 angeschlossen und bildet eine in der Förderebene 36 der Kommissionierfördervorrichtung 25 bevorzugt horizontal verlaufende Abstellebene aus, auf welche zumindest ein auf der Kommissionierfördervorrichtung 25 transportierter Zielbehälter 6 ausschleusbar und nach zumindest einem Kommissioniervorgang wieder auf die Kommissionierfördervorrichtung 25 einschleusbar ist. Hierzu ist entlang der Kommissionierfördervorrichtung 25 ein Ein- bzw. Ausschleusabschnitt 56 vorgesehen.

Zum Fördern und Ein- bzw. Ausschleusen des zu kommissionierenden Zielbehälters 6 wird nach gezeigter Ausführung eine automatische Ein- bzw. Ausschleusvorrichtung 57 eingesetzt, welche entsprechend der oben beschriebenen Einschleusvorrichtung 31 ausgebildet sein kann. Das Ein- bzw. Ausschleusen kann aber auch manuell durch die Kommissionierperson 7 erfolgen.

Der Abstellbahnhof 55 umfasst zumindest einen Abstellplatz 58, auf welchen der Zielbehälter 6 ausschleusbar ist. Andererseits können parallel zur Kommissionierfördervorrichtung 25 auch mehrere Abstellplätze 58 für Zielbehälter 6 vorgesehen werden. Der Abstellplatz 58 kann auf einer automatisierten Fördervorrichtung ausgebildet sein, deren Förderrichtung senkrecht zur Kommissionierfördervorrichtung 25 verläuft.

Eine solche Ausführung wird vorwiegend verwendet, wenn in den zu kommissionierenden Zielbehälter 6 gemäß einem Kömmissionierauftrag eine Vielzahl von unterschiedlichen Artikeln "A bis C" abgelegt werden sollen. Natürlich können auch mehr als die drei gezeigten Quellbehälter 2.1 bis 2.3 für einen Kommissionierauftrag bereitgestellt werden.

In diesem Fall wird vorerst die Kommisioniergruppe in oben beschriebener Weise gebildet. Diese umfasst nach gezeigtem Beispiel die Quellbehälter 2.1, 2.2, 2.3 und den Zielbehälter 6. Der Zielbehälter 6 wird im Einschleusabschnitt 26 in eine Lücke 37 (nicht eingetragen) zwischen die Quellbehälter 2.1, 2.2 eingeschleust. Dem Quellbehälter 2.2 wird der Quellbehälter 2.3 angereiht und auf der Kommissionierfördervorrichtung 25 zum Arbeitsbereich 30 bzw. den in Förderrichtung 38 hintereinander liegenden Kommissionierpositionen 52a bis 52d im Arbeitsbereich 30 gefördert. Der Quellbehälter 2.1 wird an der Kommissionierposition 52a, der Zielbehälter 6 an der Kommissionierposition 52b usw. bereitgestellt.

Nachdem der erste Artikel "A" aus dem Quellbehälter 2.1, welcher im Arbeitsbereich 30 an der Kommissionierposition 52a bereitgestellt wird, entnommen und in den Zielbehälter 6, welcher im Arbeitsbereich 30 an der Kommissionierposition 52b bereitgestellt wird, abgelegt wurde, wird der mit dem Artikel "A" beladene Zielbehälter 6 im Ein- bzw. Ausschleusabschnitt 56 aus der Kommissionierfördervorrichtung 25 auf den Abstellbahnhof 55 ausgeschleust. Danach werden der Quellbehälter 2.2, welcher im Arbeitsbereich 30 noch an der Kommissionierposition 52c bereitgestellt wird, und der Quellbehälter 2.1, welcher noch an der Kommissionierposition 52a bereitgestellt wird, gleichzeitig in Förderrichtung 38 zum Ausschleusabschnitt 28 gefördert. Der Quellbehälter 2.1 wird dabei stromabwärts relativ zur Kommissionierposition 52a in Förderrichtung 38 gefördert und der Quellbehälter 2.2 an dem "zwischengeparkten" Zielbehälter 6 vorbei und bis zur Komnissionierposition 52a gefördert.

Danach wird der Zielbehälter 6 im Ein- bzw. Ausschleusabschnitt 56 aus dem Abstellbahnhof 55 auf die Kommissionierfördervorrichtung 25 eingeschleust und wiederum an der Kommissionierposition 52b bereitgestellt, sodass neuerlich eine Kommissionierung möglich ist. Es wird nun der zweite Artikel "B" aus dem Quellbehälter 2.2, welcher im Arbeitsbereich 30 an der Kommissionierposition 52a bereitgestellt wird, entnommen und in den Zielbehälter 6 abgelegt.

Dieser Vorgang wiederholt sich solange, bis alle Artikel "A bis C" in den Zielbehälter 6 hineinkommissioniert sind.

Anderenfalls ist es auch möglich, dass vorerst die Artikel "A und B" aus dem stromabwärts relativ zum Zielbehälter 6 an der Kommissionierposition 52a bereitgestellten Quellbehälter 2.1 und aus dem stromaufwärts zum Zielbehälter 6 an der Kommissionierposition 52c bereitgestellten Quellbehälter 2.1 in den dazwischen an der Kommissionierposition 52b bereitgestellten Zielbehälter 6 hineinkommissioniert werden. Danach wird der Zielbehälter 6 auf den Abstellbahnhof 55 ausgeschleust und der Quellbehälter 2.2 an dem "zwischengeparkten" Zielbehälter 6 vorbeigefördert. Dabei wird der Quellbehälter 2.3 beispielweise zur Kommissionierposition 52a gefördert und dort bereitgestellt. Der Zielbehälter 6 wird wiederum auf die Kommissionierfördervorrichtung 25 eingeschleust und danach der Artikel "C" aus dem stromabwärts relativ zum Zielbehälter 6 an der Kommissionierposition 52a bereitgestellten Quellbehälter 2.3 hineinkommissioniert.

Der fertigkommissionierte Zielbehälter 6, enthaltend die Artikel "A bis C", wird danach von der Kommissionierfördervorrichtung 25 zum Ausschleusabschnitt 28 gefördert.

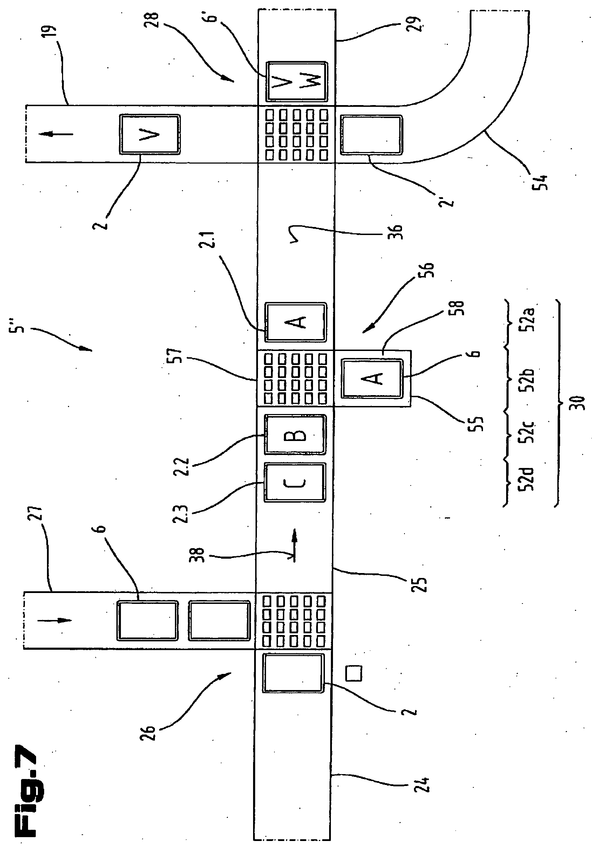

In der Fig. 7 ist eine weitere Ausführung der Kommissionierstation 5" gezeigt. im Unterschied zu Fig. 6 ist der Abstellbahnhof 55 auf einer der Kommissionierperson 7 (Fig. 1) zugewandten Seite der Kommissionierfördervorrichtung 25 angeordnet. Auch nach dieser Ausführung ist der in Fig. 6 beschriebene Kommissionablauf möglich.

Auch wenn nach den gezeigten Ausführungen der Zielbehälter 6 in die Lücke 37 zwischen Quellbehälter 2 eingeschleust wird, ist es genauso gut möglich, dass der Zielbehälter 6 vor dem ersten Quellbehälter 2.1 eingeschleust wird. Somit wird die Lücke 37 zwischen dem ersten Quellbehälter 2.1 eines aktuellen Kommissionierauftrages und einem letzten Quellbehälter 2 oder Zielbehälter 6 eines vorangegangenen Kommissionierauftrages gebildet.

Abschließend sei auch noch darauf hingewiesen, dass die Kommissioniergruppe auch mehr als drei Behälter umfassen kann, beispielweise drei Quellbehälter 2 und zwei Zielbehälter 6 oder umgekehrt. Auch kann die Reihenfolge der Beförderung der Quell-und Zielbehälter 2, 6 beliebig gewählt werden. Beispielweise kann als erster Behälter der Kommissioniergruppe ein Zielbehälter 6 und als zweiter Behälter ein Quellbehälter 2 oder umgekehrt gefördert werden. Sind mehrere Quell-und Zielbehälter 2, 6 in einer Kommissioniergruppe, so können die Quell-und Zielbehälter 2, 6 auch abwechselnd gefördert werden.

Die Ausführungsbeispiele zeigen mögliche Ausführungsvarianten des Kommissionierverfahrens und der Kommissionierstation 5, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Kommissionierstation 5 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Artikellager | 36 | Förderebene |
| 2 | Quell-Ladehilfsmittel | 37 | Lücke |
| 3 | Verteilsystem | 38 | Förderrichtung |
| 4 | Kommissionier-Arbeitsplatz | 39 | Förderrichtung |
| 5 | Kommissionierstation | 40 | Förderrichtung |
| | | | |
| 6 | Ziel-Ladehilfsmittel | 41 | Eingabeeinheit |
| 7 | Kommissionierperson | 42 | Ausgabeeinheit |
| 8 | Lagerregal | 43 | Ausschleusvorrichtung |
| 9 | Stellplatz | 44 | Förderrichtung |
| 10 | Regalförderfahrzeug | 45 | Rahmen |
| | | | |
| 11 | Plattform | 46 | Abdeckung |
| 12 | Lastaufnahmevorrichtung | 47 | Steuerungsvorrichtung |
| 13 | Einlagerbahn | 48 | Erfassungsvorrichtung |
| 14 | Auslagerbahn | 49 | Datenträger |
| 15 | Förderbahnabschnitt | 50 | Erfassungsvorrichtung |
| | | | |
| 16 | Förderbahnabschnitt | 51 | Datenträger |
| 17 | Förderbahnabschnitt | 52 | Kommissionierposition |
| 18 | Auslager-Fördertechnik | 53 | Kommisioniergruppe |
| 19 | Rücklager-Fördertechnik | 54 | Entsorgungs-Fördertechnik |
| 20 | Einschleusvorrichtung | 55 | Abstellbahnhof |
| | | | |
| 21 | Ausschleusvorrichtung | 56 | Ein- bzw. Aussschleusabschnitt |
| 22 | Einschleusvorrichtung | 57 | Ein- bzw. Ausschleusvorrichtung |
| 23 | Ausschleusvorrichtung | 58 | Abstellplatz |
| 24 | Bereitstellfördervorrichtung | | |
| 25 | Kommissionierfördervorrichtung | | |
| | | | |
| 26 | Einschleusabschnitt | | |
| 27 | Bereitstellfördervorrichtung | | |
| 28 | Ausschleusabschnitt | | |
| 29 | Abliefer-Fördertechnik | | |
| 30 | Arbeitsbereich | | |
| | | | |
| 31 | Einschleusvorrichtung | | |
| 32 | Rolle | | |
| 33 | Rahmen | | |
| 34 | Förderrichtung | | |
| 35 | Förderrichtung | | |

## Patentansprüche

1. Verfahren zum Kommissionieren von Artikeln aus Quell-Ladehilfsmitteln (2) in Ziel-Ladehilfsmittel durch eine Kommissionierperson (7) an einer Kommissionierstation (5; 5'; 5"), bei dem die Ladehilfsmittel (2, 6) über eine erste Fördertechnik (18) zur Kommissionierstation (5; 5'; 5") gefördert und an der Kommissionierstation (5; 5'; 5") zum Kommissionieren der Artikel bereitgestellt sowie nach einem Kommissioniervorgang über eine zweite Fördertechnik (19, 29) wieder von der Kommissionierstation (5; 5'; 5") abgefördert werden, wobei eine Steuerungsvorrichtung (47), insbesondere ein Materialflussrechner, die Förderbewegungen der Ladehilfsmittel (2, 6) koordiniert, **dadurch gekennzeichnet, dass** die Steuerungsvonichtung (47) die Förderbewegungen der Quell-Ladehilfsmittel (2) und Ziel-Ladehilfsmittel (6) derart koordiniert, dass das für eine Abarbeitung eines Kommissionierauftrages jeweils benötigte Quell-Ladehilfsmittel (2) und Ziel-Ladehilfsmittel (6) vor dem Kommissioniervorgang in der Kommissionierstation (5; 5'; 5") auf eine gemeinsame und durch einen Arbeitsbereich (30) für die Kommissionierperson (7) hindurchführende Kommissionierfördervorrichtung (25) der ersten Fördertechnik (18) zusammengeführt und als Kommissioniergruppe (53) aneinander gereiht der Kommissionierperson (7) auf der Kommissionierfördervorrichtung (25) bereitgestellt werden.

2. Verfahren nach Anspruch 1, **dadurch gekennzeichnet, dass** die Quell-Ladehilfsmittel (2) und Ziel-Ladehilfsmittel (6) gemäß einem Kommissionierauftrag in einem Einschleusabschnitt (26) vor der Kommissionierstation (5; 5'; 5") auf die gemeinsame Kommissionierfördervorrichtung (25) zusammengeführt werden.

3. Verfahren nach Anspruch 1, **dadurch gekennzeichnet, dass** die Quell-Ladehilfsmittel (2) und Ziel-Ladehilfsmittel (6) in einem Ausschleusabschnitt (28) nach der Kommissionierstation (5; 5'; 5") wieder vereinzelt auf der zweiten Fördertechnik (18, 29) gefördert werden.

4. Verfahren nach Anspruch 1 oder 2, **dadurch gekennzeichnet, dass** die Quell-Ladehilfsmittel (2) und/oder Ziel-Ladehilfsmittel (6) auf einer Bereitstellfördervorrichtung (24, 27), welche vorder Kommissionierstation (5; 5'; 5") an die Kommissionierfördervorrichtung (25) angeschlossen ist, bereitgestellt und gemäß Kommissionieraufträgen in der entsprechenden Anzahl auf die Kommissionierfördervorrichtung (25) eingeschleust bzw. gefördert, werden.

5. Verfahren nach einem der Ansprüche 1 bis 4, **dadurch gekennzeichnet, dass** die Quell-Ladehilfsmitteln (2) jeweils über einen an diesen angeordneten Datenträger (49) vor dem Einschleusen der Ziel-Ladehilfsmittel (6) auf die Kommissionieuördervorrichtung (25) an einer Erfassungsvorrichtung (48) vorbeibewegt und von der Steuerungsvorrichtung (47) anhand des Datenträgers (49) identifiziert werden.

6. Verfahren nach einem der Ansprüche 1 bis 5, **dadurch gekennzeichnet, dass** die Steuerungsvorrichtung (47) nach Identifikation des Quell-Ladehilfsmittels (2) für einen diesem zugeordneten Kommissionierauftrag eine Anzahl an benötigten Ziel-Ladehilfsmitteln (6) ermittelt und dementsprechend die Anzahl an Ziel-Ladehilfsmitteln (6) auf die Kommissionierfördervorrichtung (25) eingeschleust und gemeinsam mit dem Quell-Ladehilfsmittel (2) auf der Kommissionierfördervorrichtung (25) gefördert wird, wobei das Quell-Ladehilfsmittel (2) und die Anzahl an Ziel-Ladehilfsrriitteln (6) die Kommissioniergruppe (53.1) bilden.

7. Verfahren nach einem der Ansprüche 1 bis 5, **dadurch gekennzeichnet, dass** die Steuerungsvorrichtung (47) nach Identifikation eines ersten Quell-Ladehilfsmittels (2) für einen diesem zugeordneten Kommissionierauftrag, welcher unterschiedliche Artikel enthält, zumindest ein zweites Quell-Ladehilfsmittel (2) für diesen Kommissionierauftrag sowie eine Anzahl an benötigten Ziel-Ladehilfsmitteln (6) ermittelt, wobei das erste Quell-Ladehilfsmittel (2), das zweite Quell-Ladehilfsmittel (2) und die Anzahl an Ziel-Ladehilfsmitteln (6) gemeinsam auf der Kommissionierfördervorrichtung (25) gefördert werden, wobei die Quell-Ladehilfsmitteln (2) und die Anzahl an Ziel-Ladehilfsmitteln (6) die Kommissioniergruppe (53.2; 53.3; 53.5) bilden.

8. Verfahren nach einem der Ansprüche 1 bis 7, **dadurch gekennzeichnet, dass** die Steuerungsvorrichtung (47) nach Identifikation des Quell-Ladehilfsmittels (2) für einen diesem zugeordneten ersten Kommissionierauftrag zusätzlich die anderen erfassten Kommissionieraufträge auswertet und dass zumindest ein zweiter Kommissionierauftrag, welcher ebenso aus diesem Quell-Ladehilfsmittel (2) einen Artikel benötigt, abgearbeitet wird, indem im Einschleusabschnitt (26) ein zweites Ziel-Ladehilfsmittel (6) auf die Kommissionierfördervorrichtung (25) eingeschleust und auf der Kommissionierfördervorrichtung (25) gemeinsam mit dem Quell-Ladehilfsmittel (2) und dem ersten Ziel-Ladehilfsmittel (6) für den ersten Kommissionierauftrag gefördert wird, wobei das Quell-Ladehilfsmittel (2) und die Ziel-Ladehilfsmitteln (6) der unterschiedlichen Kommissionieraufträge die Kommissioniergruppe (53.3) bilden.

9. Verfahren nach einem der Ansprüche 1 bis 8, **dadurch gekennzeichnet, dass** die Ziel-Ladehilfsmitteln (6) jeweils über einen an diesen angeordneten Datenträger (51) vor dem Einschleusen an einer Erfassungsvorrichtung (50) vorbeibewegt und von der Steuerungsvorrichtung (47) anhand des Datenträgers (51) identifiziert werden.

10. Verfahren nach Anspruch 7 oder 9, **dadurch gekennzeichnet, dass** die Quell-Ladehilfsmitteln (2) und/oder Ziel-Ladehilfsmitteln (6) vor dem Einschleusabschnitt (26) auf einer Bereitstellfördervorrichtung (24; 27) in nach Kommissionieraufträgen sortierter Reihenfolge bereitgestellt werden.

11. Verfahren nach einem der Ansprüche 1 bis 10, **dadurch gekennzeichnet, dass** zumindest ein Ziel-Ladehilfsmittel (6) im Arbeitsbereich (30) für die Kommissionierperson (7) von der Kommissionierfördervorrichtung (25) auf einen dazu seitlich angeordneten Abstellbahnhof (55), welcher im Arbeitsbereich (30) an die Kommissionierfördervorrichtung (25) angeschlossen ist, in zumindest eine Pufferposition auf einem Abstellplatz (58) ausgeschleust und nach zumindest einem Kommissioniervorgang aus der Pufferposition wieder auf die Kommissionierfördervorrichtung (25) eingeschleust wird.

12. Kommissionierstation (5; 5'; 5") zum Kommissionieren von Artikeln aus Quell-Ladehilfsmitteln (2) in Ziel-Ladehilfsmittel (6) durch eine Kommissionierperson (7), welche eine erste Fördertechnik (18) mit einer ersten Bereitstellfördervorrichtung (24) zum Antransport von Quell-Ladehilfsmitteln (2) zur Kommissionierstation (5; 5'; 5") und einer zweiten Bereitstellfördervorrichtung (27) zum Antransport von Ziel-Ladehilfsmitteln (6) zur Kommissionierstation (5; 5'; 5") und
eine zweite Fördertechnik (19, 29) zum Abtransport von Quell-Ladehilfsmitteln (2) und Ziel-Ladehilfsmitteln (6) von der Kommissionierstation (5; 5'; 5") sowie
eine Steuerungsvorrichtung (47), insbesondere einen Materialflussrechner, zur Koordinierung der Förderbewegungen der Ladehilfsmittel (2, 6) umfasst,
**dadurch gekennzeichnet, dass**
an der ersten Fördertechnik (18) in einem Einschleusabschnitt (26) die zweite Bereitstellfördervorrichtung (27) zum Antransport von Ziel-Ladehilfsmitteln (6) zur Kommissionierstation (5; 5'; 5") und in einem Ausschleusabschnitt (28) eine Rücklager-Fördertechnik (19) und Abliefer-Fördertechnik (29) zum automatisierten Abtransport von Quell-Ladehilfsmitteln (2) und Ziel-Ladehilfsmitteln (6) von der Kommissionierstation (5; 5'; 5") anschließen, wobei die erste Fördertechnik (18) ausschließlich eine einzige, durch einen Arbeitsbereich (30) der Kommissionierperson (7) hindurchführende Kommissionierfördervorrichtung (25) zum Transport von Quell-Ladehilfsmitteln (2) und Ziel-Ladehilfsmitteln (6) sowie eine Einschleusvorrichtung (31) zum Fördern und Einschleusen von Quell-Ladehilfsmitteln (2) und Ziel-Ladehilfsmitteln (6) von den Bereitstellfördervorrichtungen (24, 27) auf die Kommissionierfördervorrichtung (25) umfasst, und dass
entlang der Bereitstellfördervorrichtung (24) stromaufwärts relativ zum Einschleusabschnitt (26) eine Erfassungsvorrichtung (48) zum Auslesen eines an den Quell-Ladehilfsmitteln (2) jeweils angeordneten Datenträgers (49) angeordnet ist, wobei die Erfassungsvorrichtung (48) mit der Steuerungsvorrichtung (47) verbunden ist, die ihrerseits die Quell-Ladehilfsmitteln (2) identifiziert und die Anzahl an bestimmten Quell-Ladehilfsmitteln (2) und benötigten Ziel-Ladehilfsmitteln (6) zu einem Kommissionierauftrag ermittelt, und wobei die
Einschleusvorrichtung (31) von der Steuerungsvorrichtung (47) derart angesteuert wird, dass gemäß einem Kommissionierauftrag vor einem Kommissioniervorgang zumindest ein Ziel-Ladehilfsmittel (6) auf die Kommissionierfördervorrichtung (25) eingeschleust wird, sodass der Kommissionierperson (7) die Quell- und Ziel-Ladehilfsmitteln (2, 6) aneinander gereiht als Kommissioniergruppe (53) im Arbeitsbereich (30) auf der Kommissionierfördervorrichtung (25) bereitgestellt werden.

13. Kommissionierstation nach Anspruch 12, **dadurch gekennzeichnet, dass** ein Abstellbahnhof (55) vorgesehen ist, welcher im Arbeitsbereich (30) an die Kommissionierfördervorrichtung (25) angeschlossen ist und eine in der Förderebene (36) verlaufende Abstellebene ausbildet, auf welchen zumindest ein auf der Kommissionierfördervorrichtung (25) transportiertes Ziel-Ladehilfsmittel (6) ausschleusbar und nach zumindest einem Kommissioniervorgang vom Abstellbahnhof (55) wieder auf die Kommissionierfördervorrichtung (25) einschleusbar ist.

14. Kommissionierstation nach Anspruch 12, **dadurch gekennzeichnet, dass** oberhalb der Kommissionierfördervorrichtung (25) und in dessen Längsrichtung an einem Rahmen (45) der Kommissionierstation (5; 5'; 5") verstellbar gelagerte Abdeckungen (46) vorgesehen sind, welche einen Arbeitsbereich (30) für die Kommissionierperson (7) begrenzen.

15. Lagersystem mit einem Artikellager (1) für Quell-Ladehilfsmittel (2), einem an das Artikellager (1) angeschlossenen Verteilsystem (3) für Quell-Ladehilfsmittel (2) und zumindest einer an das Verteilsystem (3) angeschlossenen Kommissionierstation (5; 5'; 5") nach einem der Ansprüche 12 bis 14.

## Claims

1. Method for picking articles from source loading aids (2) into destination loading aids by an order picker (7) at an order-picking station (5; 5'; 5 "), whereby the loading aids (2, 6) are conveyed via a first conveyor system (18) to the order-picking station (5; 5'; 5") and are provided at the order-picking station (5; 5'; 5 ") for picking the articles and after a picking operation are discharged from the picking station (5; 5'; 5") again via a second conveyor system (19, 29), wherein a control device (47), in particular a material flow computer, coordinates the conveying movements of the loading aids (2, 6) **characterized in that** the control device (47) can coordinate the conveying movements of the source loading aids (2) and destination loading aids (6) in such a manner that the source loading aids (2) and destination loading aids (6) required for processing a picking order are brought together before the picking operation in the picking station (5; 5'; 5") onto a common picking conveyor (25) of the first conveyor system (18) passing through a working area (30) for the order picker (7), and are presented to the order picker (7) arranged next to one another as a picking group (53) on the picking conveyor (25).

2. Method according to claim 1, **characterized in that** the source loading aids (2) and the destination loading aids (6) are merged onto the common picking conveyor (25) in an infeed section (26) upstream of the picking station (5; 5'; 5 ") according to a picking order.

3. Method according to claim 1, **characterized in that** the source loading aids (2) and the destination loading aids (6) are separated again in an outfeed section (28) downstream of the picking station (5; 5'; 5 ") and conveyed on the second conveyor system (18, 29).

4. Method according to claim 1 or 2, **characterized in that** the source loading aids (2) and/or the destination loading aids (6) are provided on a transport conveying device (24, 27), which is connected to the picking conveyor (25) upstream of the order-picking station (5; 5'; 5"), and fed and/or transferred onto the picking conveyor (25) in a number which corresponds to the picking orders.

5. Method according to one of claims 1 to 4, **characterized in that** before destination loading aids (6) are fed onto the picking conveyor (25), the source loading aids (2) each are moved past a detection device (48) and each are identified by the control device (47) based on a data carrier (49) disposed on the source loading aid (2).

6. Method according to one of claims 1 to 5, **characterized in that** once the source loading aid (2) has been identified, the control device (47) determines the number of destination loading aids (6) required for a thereto assigned picking order and the corresponding number of destination loading aids (6) is fed onto the picking conveyor (25) and conveyed on the picking conveyor (25) together with the source loading aids (2), wherein the source loading aid (2) and the number of destination loading aids (6) form the picking group (53.1).

7. Method according to one of claims 1 to 5, **characterized in that** once a first source loading aid (2) for a thereto assigned picking order containing different articles has been identified, the control device (47) determines at least a second source loading aid (2) for said picking order as well as a number of destination loading aids (6), wherein the first source loading aid (2), the second source loading aid (2) and the number of destination loading aids (6) are conveyed on the picking conveyor (25) together, wherein the source loading aids (2) and the number of destination loading aids (6) form the picking group (53.2; 53.3; 53.5).

8. Method according to one of claims 1 to 7, **characterized in that** once the source loading aid (2) for a thereto assigned first picking order has been identified, the control device (47) additionally evaluates the other entered picking orders and that at least a second picking order which also requires an article from said source loading aid (2) is processed by feeding a second destination loading aid (6) onto the picking conveyor (25) in the infeed section (26) and is conveyed on the picking conveyor (25) together with the source loading aid (2) and the first destination loading aid (6) for the first picking order, wherein the source loading aid (2) and the destination loading aids (6) of the different picking orders form the picking group (53.3).

9. Method according to one of claims 1 to 8, **characterized in that** before the destination loading aids (6) are fed in, the destination loading aids (6) each are moved past a detection device (50) and each are identified by the control device (47) based on a data carrier (51) disposed on the destination loading aid (6).

10. Method according to claim 7 or 9, **characterized in that** the source loading aids (2) and/or the destination loading aids (6) are provided upstream of the infeed section (26) on a transport conveying device (24; 27) in a sequence sorted according to picking orders.

11. Method according to one of claims 1 to 10, **characterized in that** at least one destination loading aid (6) in the working area (30) for the order picker (7) is discharged from the picking conveyor (25) onto a laterally disposed parking station (55), which is connected to the picking conveyor (25) in the working area (30), into at least one buffer position on a storage space (58) and is once again fed onto the picking conveyor (25) from the buffer position after at least one picking operation.

12. Order-picking station (5; 5'; 5") for picking articles from source loading aids (2) into destination loading aids (6) by an order picker (7), which order-picking station (5; 5'; 5") comprises
a first conveyor system (18) comprising a first transport conveying device (24) for transporting source loading aids (2) to the order-picking station (5; 5'; 5") and a second transport conveying device (27) for transporting destination loading aids (6) to the order-picking station (5; 5'; 5")
and a second conveyor system (19, 29) for transporting source loading aids (2) and destination loading aids (6) away from the order-picking station (5; 5'; 5 ") as well as a control device (47), in particular a material flow computer, for coordinating the conveying movements of the loading aids (2, 6),
**characterized in that**
the second transport conveying device (27) for transporting destination loading aids (6) to the order-picking station (5; 5'; 5") adjoins the first conveyor system (18) in an infeed section (26) and a storage return conveyor system (19) and a delivery conveying system (29) for automated transporting of source loading aids (2) and destination loading aids (6) away from the order-picking station (5; 5'; 5") adjoin in a discharge section (28), and
the first conveyor system (18) exclusively comprises one single picking conveyor (25) passing through the working area (30) of the order picker (7) for transporting source loading aids (2) and destination loading aids (6) as well as an infeed device (31) for conveying and feeding source loading aids (2) and destination loading aids (6) from the transport conveying devices (24, 27) onto the picking conveyor (25), and that a detection device (48) for reading a data carrier (49) arranged on the respective source loading aids (2) is disposed along the transport conveying device (24) upstream relative to the infeed section (26), wherein the detection device (48) is connected with the control device (47), which for its part identifies the source loading aids (2) and determines the number of certain source loading aids (2) and destination loading aids (6) required for a picking order, and wherein the
infeed device (31) is controlled by the control device (47) in such a way that according to a picking order prior to a picking operation, at least one destination loading aid (6) is transferred onto the picking conveyor (25), so that the source and destination loading aids (2, 6) can be presented to the order picker (7) arranged next to one another as a picking group (53) in the working area (30) on the picking conveyor (25).

13. Order-picking station according to claim 12, **characterized in that** a parking station (55) is provided which is connected to the picking conveyor (25) in the working area (30) and forms a parking plane extending in the conveying plane (36), onto which at least one destination loading aid (6) transported on the picking conveyor (25) can be discharged and after at least one picking operation can once again be fed from the parking station (55) onto the picking conveyor (25).

14. Order-picking station according to claim 12, **characterized in that** above the picking conveyor (25) and in its longitudinal direction covers (46) are displaceably mounted to a frame (45) of the order-picking station (5; 5'; 5") are provided, which covers delimit a working area (30) for the order picker (7).

15. Storage system with an article warehouse (1) for source loading aids (2), a distribution system (3) for source loading aids (2) which is connected to the article warehouse (1) and at least one order-picking station (5; 5'; 5") according to one of claims 12 to 14 which is connected to the distribution system (3).

## Revendications

1. Procédé de préparation d'articles à partir d'équipements de chargement sources (2) vers des équipements de chargement cibles par un préparateur (7) au niveau d'une station de préparation (5 ; 5' ; 5"), dans lequel les équipements de chargement (2, 6) sont convoyés, par l'intermédiaire d'un système de convoyage (18), vers la station de préparation (5 ; 5' ; 5") et mis à disposition au niveau de la station de préparation (5 ; 5' ; 5") pour la préparation des articles, et évacués, selon un processus de préparation, par l'intermédiaire d'un deuxième système de convoyage (19, 29), de la station de préparation (5 ; 5' ; 5"), un dispositif de commande (47), plus particulièrement un calculateur de flux de matériau, coordonnant les mouvements de convoyage des équipements de chargement (2, 6), **caractérisé en ce que** le dispositif de commande (47) coordonne les mouvements de convoyage des équipements de chargement sources (2) et des équipements de chargement cibles (6) de façon à ce que, pour le traitement d'une tâche de préparation, les équipements de chargement sources (2) et les équipements de chargement cibles (6) nécessaires sont regroupés, avant le processus de préparation, dans la station de préparation (5 ; 5' ; 5") sur un dispositif de convoyage de préparation (25) commun du premier système de convoyage (18) et traversant une zone de travail (30) pour le préparateur (7) et sont mises à disposition de manière juxtaposée en tant que groupe de préparation (53) sur le dispositif de convoyage de préparation (25).

2. Procédé selon la revendication 1, **caractérisé en ce que** les équipements de chargement sources (2) et les équipements de chargement cibles (6) sont regroupés selon une tâche de préparation dans une portion d'introduction (26) avant la station de préparation (5 ; 5' ; 5") sur le dispositif de convoyage de préparation (25) commun.

3. Procédé selon la revendication 1, **caractérisé en ce que** les équipements de chargement sources (2) et les équipements de chargement cibles (6) sont convoyés à nouveau individuellement sur le deuxième système de convoyage (18, 29) dans une portion d'introduction (28) après la station de préparation (5 ; 5' ; 5").

4. Procédé selon la revendication 1 ou 2, **caractérisé en ce que** les équipements de chargement sources (2) et/ou les équipements de chargement cibles (6) sont mis à disposition sur un dispositif de convoyage de mise à disposition (24, 27), qui est branché, avant la station de préparation (5 ; 5' ; 5"), au dispositif de convoyage de préparation (25), et sont introduits ou convoyés, selon des tâches de préparation, dans un nombre correspondant, sur le dispositif de convoyage de préparation (25).

5. Procédé selon l'une des revendications 1 à 4, **caractérisé en ce que** les équipements de chargement sources (2) sont déplacés chacun, au-dessus d'un support de données (49) disposé sur ceux-ci, avant l'introduction des équipements de chargement cibles (6), sur le dispositif de convoyage de préparation (25) le long d'un dispositif de détection (48) et identifiés par le dispositif de commande (47) à l'aide du support de données (49).

6. Procédé selon l'une des revendications 1 à 5, **caractérisé en ce que** le dispositif de commande (47) détermine, après identification de l'équipement de chargement source (2) pour un tâche de préparation attribuée à celui-ci, un nombre d'équipements de chargement cibles (6) nécessaires et introduit par conséquent le nombre d'équipements de chargement cibles (6) sur le dispositif de convoyage de préparation (25) et est transporté, ensemble avec l'équipement de chargement source (2), sur le dispositif de convoyage de préparation (25), l'équipement de chargement source (2) et le nombre d'équipements de chargement cibles (6) formant le groupe de préparation (53.1).

7. Procédé selon l'une des revendications 1 à 5, **caractérisé en ce que** le dispositif de commande (47) détermine, après identification d'un premier équipement de chargement source (2) pour une tâche de préparation attribuée à celui-ci, qui contient différents articles, au moins un deuxième équipement de chargement source (2) pour cette tâche de préparation, ainsi qu'un nombre d'équipements de chargement cibles (6) nécessaires, le premier équipement de chargement source (2), le deuxième équipement de chargement source (2) et le nombre d'équipements de chargement cibles (6) étant transportés ensemble sur le dispositif de convoyage de préparation (25), les équipements de chargement source (2) et le nombre d'équipements de chargement cibles (6) formant le groupe de préparation (53.2 ; 53.3 ; 53.5).

8. Procédé selon l'une des revendications 1 à 7, **caractérisé en ce que** le dispositif de commande (47) analyse en outre, après identification de l'équipement de chargement source (2) pour une première tâche de préparation attribuée à celui-ci, les autres tâches de préparation détectées et **en ce qu'**au moins une deuxième tâche de préparation, qui nécessite également un article provenant de cet équipement de chargement source (2), soit effectuée, grâce au fait que, dans la portion d'introduction (26), un deuxième équipement de chargement cible (6) est introduit sur le dispositif de convoyage de préparation (25) et est transporté ensemble avec l'équipement de chargement source (2) et le premier équipement de chargement cible (6) pour la première tâche de préparation (6), sur le dispositif de convoyage de préparation (25), l'équipement de chargement source (2) et les équipements de chargement cibles (6) des différentes tâches de préparation formant le groupe de préparation (53.3).

9. Procédé selon l'une des revendications 1 à 8, **caractérisé en ce que** les équipements de chargement cibles (6) sont déplacés chacun, au-dessus d'un support de données (51) disposé sur celui-ci, avant l'introduction, le long d'un dispositif de détection (50) et est identifié par le dispositif de commande (47) à l'aide du support de données (51).

10. Procédé selon la revendication 7 ou 9, **caractérisé en ce que** les équipements de chargement sources (2) et/ou les équipements de chargement cibles (6) sont mis à disposition, avant la portion d'introduction (26), sur un dispositif de convoyage de mise à disposition (24 ; 27) dans l'ordre des tâches de préparation.

11. Procédé selon l'une des revendications 1 à 10, **caractérisé en ce qu'**au moins un équipement de chargement cible (6) est évacué, dans la zone de travail (30) pour le préparateur (7), par le dispositif de convoyage de préparation (25), sur une gare de dépôt (55) disposée sur le côté de celui-ci, qui est connectée dans la zone de travail (30), au dispositif de convoyage de préparation (25), dans au moins une position tampon sur une aire de stockage (58) et introduit à nouveau, après au moins un processus de préparation, de la position tampon vers le dispositif de convoyage de préparation (25).

12. Station de préparation (5 ; 5' ; 5") pour la préparation d'articles à partir d'équipements de chargement sources (2) vers des équipements de chargement cibles (6) par un préparateur (7), qui comprend
un premier système de convoyage (18) avec un premier dispositif de convoyage de mise à disposition (24) pour le transport d'équipements de chargement sources (2) vers la station de préparation (5 ; 5' ; 5") et un deuxième dispositif de convoyage de mise à disposition (27) pour le transport d'équipements de chargement cibles (6) vers la station de préparation (5 ; 5' ; 5") et
un deuxième système de convoyage (19, 29) pour l'évacuation d'équipements de chargement sources (2) et d'équipements de chargement cibles (6) hors de la station de préparation (5 ; 5' ; 5") et
un dispositif de commande (47), plus particulièrement un calculateur de flux de matériau, pour la coordination des mouvements de convoyage des équipements de chargement (2, 6),
**caractérisée en ce que**
au premier système de convoyage (18), dans une portion d'introduction (26), le deuxième dispositif de convoyage de mise à disposition (27) pour le transport d'équipements de chargement cibles (6) vers la station de préparation (5 ; 5' ; 5"), sont reliés un système de convoyage de retour (19) et un système de convoyage de livraison (29) pour l'évacuation automatique d'équipements de chargement sources (2) et d'équipements de chargement cibles (6) hors de la station de préparation (5 ; 5' ; 5"), le premier système de convoyage (18) comprenant un seul dispositif de convoyage de préparation (25) traversant une zone de travail (30) du préparateur (7), pour le transport d'équipements de chargement sources (2) et d'équipements de chargement cibles (6), ainsi qu'un dispositif d'introduction (31) pour le convoyage et l'introduction d'équipements de chargement sources (2) et d'équipements de chargement cibles (6) par les dispositifs de convoyage de mise à disposition (24,27) sur le dispositif de convoyage de préparation (25) et **en ce que**
le long du dispositif de convoyage de mise à disposition (24), en amont par rapport à la portion d'introduction (26), se trouve un dispositif de détection (48) pour la lecture d'un support de données (49) disposé sur chacun des équipements de chargement sources (2), le dispositif de détection (48) étant relié au dispositif de commande (47), qui identifie de son côté les équipements de chargement sources (2) et détermine le nombre d'équipements de chargement sources (2) déterminés et d'équipements de chargement cibles (6) nécessaires pour une tâche de préparation et
le dispositif d'introduction (31) étant contrôlé par le dispositif de commande (47) de façon à ce que, selon une tâche de préparation, avant un processus de préparation, au moins un équipement de chargement cible (6) est introduit sur le dispositif de convoyage de préparation (25), de façon à ce que les équipements de chargement sources et cibles (2, 6) soient mis à la disposition du préparateur (7), de manière juxtaposée, en tant que groupe de préparation (53), dans la zone de travail (30) sur le dispositif de convoyage de préparation (25).

13. Station de préparation selon la revendication 12, **caractérisée en ce qu'**une gare de stockage (55) est prévue, qui est reliée, dans la zone de travail (30), au dispositif de convoyage de préparation (25) et constitue un plan de stockage s'étendant dans le plan de convoyage (36), sur lequel au moins un équipement de chargement cible (6) transporté sur le dispositif de convoyage de préparation (25) peut être évacué et, après au moins un processus de préparation, introduit à nouveau par la gare de stockage (55) sur le dispositif de convoyage de préparation (25).

14. Station de préparation selon la revendication 12, **caractérisée en ce que**, au-dessus du dispositif de convoyage de préparation (25), des recouvrements (46), logés de manière réglable dans sa direction longitudinale sur un cadre (45) de la station de préparation (5 ; 5' ; 5") sont prévus, qui limitent une zone de travail (30) pour le préparateur (7).

15. Système de stockage avec un stockage d'articles (1) pour des équipements de chargement sources (2), un système de répartition (3) relié au stockage d'articles (1) pour des équipements de chargement sources (2) et au moins une station de préparation (5 ; 5' ; 5") reliée au système de répartition (3), selon l'une des revendications 12 à 14.
